# FASCICULE DE BREVET EUROPEEN

(11) **EP 3 125 848 B1**
(45) Date de publication et mention de la délivrance du brevet: **19.08.2020**
(21) Numéro de dépôt: 15741778.3
(22) Date de dépôt: 23.03.2015
(51) Int. Cl.: A61H 3/04

(54) **EXOSQUELETTE COMPRENANT UNE STRUCTURE DE PIED**
EXOSKELETT MIT EINER FUSSSTRUKTUR
EXOSKELETON COMPRISING A FOOT STRUCTURE

(30) Priorité: 21.03.2014 FR 1452370; 21.03.2014 FR 1452372
(43) Date de publication de la demande: 08.02.2017
(73) Titulaire: Wandercraft, 75004 Paris (FR)
(72) Inventeur: BOULANGER, Alexandre, F-91400 Orsay (FR)
(74) Mandataire: Regimbeau
(86) Numéro de dépôt international: PCT/EP2015/056150
(87) Numéro de publication internationale: WO 2015/140353

(56) Documents cités:
- WO-A2-2012/057452
- US-A- 3 358 678
- US-A- 5 282 460

## Description

### DOMAINE TECHNIQUE

Un aspect de l'invention concerne un exosquelette comprenant une structure de pied.

### ETAT DE LA TECHNIQUE ANTERIEURE

La publication brevet WO 2011/002306 décrit un système de commande pour commander un exosquelette porté par un utilisateur et comportant un ou plusieurs actionneurs associés aux différents membres de l'exosquelette correspondant chacun à une partie du corps de l'utilisateur.

L'exosquelette comprend une structure de pied à fixer sur un pied d'un utilisateur. La structure de pied est reliée de manière pivotante à une extrémité d'un élément inférieur d'une structure de jambe. Un patin dans lequel l'utilisateur peut placer son pied est en prise, de façon amovible, avec la structure de pied.

La publication de brevet WO2012/057452 décrit un exosquelette tel que défini dans le préambule de la revendication 1.

### EXPOSE DE L'INVENTION

Il existe un besoin pour une solution permettant de réaliser des exosquelettes reproduisant une fonction de marche humaine de façon relativement fidèle et énergétiquement efficace.

Selon un premier aspect de l'invention, telle que définie dans la revendication 1, un exosquelette comprend :
- une structure de pied comprenant un plan de support sur lequel un pied d'une personne portant l'exosquelette peut venir en appui lorsque le pied est à plat, le plan de support comprenant :
- une plate-forme avant et une plate-forme arrière, et
- une liaison pivot pied reliant la plate-forme avant à la plate-forme arrière.

Dans un tel exosquelette, la liaison pivot pied constitue une cassure du plan de support permettant un mouvement de marche plus fluide, moins saccadé, plus naturel et plus rapide par rapport à un plan de support en une seule partie, sans cassure, tel que proposé dans la publication brevet précitée. Lors d'un processus de marche, un plan de support en une seule partie, sans cassure, devrait quitter le sol soit parallèlement à ce sol, soit en terminant par un appui ponctuel ou linéique difficilement contrôlable. La liaison pivot pied permet de surmonter ces contraintes et contribue donc à reproduire plus fidèlement une fonction de marche que la personne portant l'exosquelette a perdue. Cela contribué aussi à une acceptation plus facile de l'exosquelette par la personne le portant, ainsi qu'une accommodation plus facile et plus rapide.

Un autre avantage de la liaison pivot pied consiste en un effet de propulsion vers l'avant lorsque la plate-forme arrière décolle du sol, tandis que la plate-forme avant continue à être en appui sur le sol. La cassure, formée par la liaison pivot pied, constitue un axe de rotation pour un mouvement de chute contrôlée. Cet axe de rotation permet d'ajouter une composante de translation vers l'avant au mouvement de chute contrôlée. Cet effet de propulsion vers l'avant est important dans une marche dynamique d'un être humain. L'effet permet d'allonger un pas d'une façon énergétiquement efficace.

Un mode de réalisation de l'invention peut comprendre une ou plusieurs des caractéristiques supplémentaires suivantes telles que définies dans les paragraphes suivants.

La liaison pivot pied peut comprendre un membre élastiquement déformable disposé pour emmagasiner de l'énergie lorsque la plate-forme avant est pliée par rapport à la plate-forme arrière. Le membre élastiquement déformable permet de récupérer une partie de l'énergie potentielle qui se libère lors d'une phase dans un processus de marche qui se caractérise par une chute contrôlée vers l'avant. Le membre élastiquement déformable stocke cette énergie pour la restituer dans une autre phase, par exemple, lorsque la structure de pied décolle du sol en fin de pas.

Le plan de support de la structure de pied peut comprendre une semelle souple apte à entrer en contact avec le sol.

Le plan de support de la structure de pied peut comprendre une surface apte à entrer en contact avec le sol dont au moins une partie est délimitée par un bord arrondi. Un tel bord arrondis permet de fluidifier plus encore un mouvement vers l'avant. Des arrondis sur les côtés de la semelle permettent au pied de rouler légèrement sur ses côtés, notamment lorsque des impulsions latérales sont produites au niveau du bassin afin d'équilibrer un mouvement parasite latéral, notamment en position debout à l'arrêt.

La liaison pivot pied peut se situer dans un quadrant délimité par une coupe sagittale médiane de la personne portant l'exosquelette et une coupe frontale passant par la jambe, la liaison pivot pied présentant un axe de pivotement définissant un triangle rectangle dans ce même quadrant et ayant un angle compris dans une plage de 45° à 90° par rapport à la coupe sagittale médiane, de préférence entre 50° et 85°, par exemple entre 60° et 65°, typiquement de l'ordre de 63°.

La plate-forme arrière peut être plus proche de la coupe sagittale médiane que la plate-forme avant, de sorte que l'axe longitudinal médian du plan de support présente un angle compris entre 15° et 35° par rapport à la coupe sagittale médiane lorsque l'exosquelette est en position de repos, par exemple entre 15° et 20°. Cette orientation vers l'extérieur permet de mieux reproduire une marche humaine puisque les pieds humains sont également orientés de cette manière. De plus, lors d'un pas, pendant une phase de poussée, cette orientation permet de mieux diriger la poussée. La poussée comprend ainsi une composante latéro-médiale, afin de propulser le corps de la personne portant l'exosquelette d'un pied porteur vers un pied récepteur.

Selon un deuxième aspect, l'exosquelette peut comprendre une structure de jambe disposée pour côtoyer la jambe de la personne portant l'exosquelette. Une liaison pivot cheville peut relier la structure de pied à la structure de jambe. La liaison pivot cheville peut présenter un axe de pivotement ayant :
- un angle non nul compris dans une plage de 0° à 30° par rapport au plan de support de la structure de pied, de préférence entre 5° et 30°, et
- un angle non nul compris dans une plage de 0° à 45° par rapport à un plan perpendiculaire à l'axe longitudinal médian du plan de support.

Dans un tel exosquelette, l'axe de pivotement de la liaison pivot cheville a une orientation particulière : l'axe de pivotement n'est contenu dans aucun plan de référence : frontal, sagittal ou horizontal. Cet axe de pivotement particulier, qui est oblique, permet à l'exosquelette de produire des mouvements au niveau d'une cheville qui se rapprochent de mouvements naturels, notamment ceux qui sont les plus fréquents et importants à ce niveau. Une seule liaison pivot et un seul actionneur suffisent donc au niveau de la cheville. Par contraste, l'exosquelette présenté dans la publication brevet précitée comprend deux liaisons pivot et deux actionneurs pour produire des mouvements au niveau d'une cheville. L'exosquelette conforme à l'invention peut donc être de structure plus simple, plus léger, moins encombrant, et moins énergivore.

Selon une caractéristique préférée mais non limitative, l'exosquelette peut en outre comprendre un dispositif d'actionnement disposé entre la structure de jambe et la structure de pied pour provoquer un pivotement de la structure de pied par rapport à la structure de jambe selon l'axe de pivotement de la liaison pivot cheville.

De manière optionnelle, le dispositif d'actionnement comprend :
- un joint de Cardan, une liaison de rotule, et un actionneur disposé entre le joint de Cardan et la liaison de rotule, ou
- deux joints de Cardan et un actionneur sans anti-rotation disposé entre les joints de Cardan, typiquement un actionneur linéaire.
Ces éléments permettent une boucle cinématique qui peut effectuer des mouvements en trois dimensions. Lors de ces mouvements l'actionneur reste le long d'un segment inférieur de la structure de jambe. Cela permet un faible encombrement de cet ensemble et évite des interférences entre l'actionneur et la jambe concernée de la personne portant l'exosquelette.

La structure de jambe peut comprendre un segment de jambe supérieur disposé pour côtoyer une partie supérieure de la jambe se situant au-dessus d'un genou de la personne portant l'exosquelette, un segment de jambe inférieur disposé pour côtoyer une partie inférieure de la jambe se situant en dessous du genou, et une liaison pivot genou reliant le segment de jambe inférieur au segment de jambe supérieur. Le segment de jambe supérieur peut présenter une inclinaison non nulle comprise dans une plage de 0° à 30° par rapport au segment de jambe inférieur lorsque l'exosquelette est en position de repos, de préférence de 0° à 20°, de sorte qu'une extrémité haute du segment de jambe supérieur soit plus éloignée d'une coupe sagittale médiane de la personne portant l'exosquelette qu'une extrémité basse. Cette inclinaison permet à l'exosquelette d'effectuer un transfert de poids vers un pied de façon plus rapide et plus économe en énergie, par rapport à une structure sans une telle inclinaison. L'inclinaison réduit un déplacement du centre de gravité qui est nécessaire pour que celui-ci se trouve au-dessus d'un pied porteur.

L'exosquelette peut comprendre une structure de bassin disposée pour être attachée au bassin de la personne portant l'exosquelette, une liaison pivot orientation jambe disposée entre la structure de bassin et la structure de jambe, la liaison pivot orientation jambe présentant un axe de pivotement vertical lorsque l'exosquelette est en position de repos. Cela permet à une jambe d'effectuer des rotations verticales, qui peuvent intervenir dans un processus de stabilisation et dans un processus de marche. Ces rotations verticales contribuent à ce que ces processus soient efficaces et perçus comme étant naturels par la personne portant l'exosquelette.

L'exosquelette peut comprendre un dispositif de commande apte à commander au moins un actionneur compris dans l'exosquelette.

Le dispositif de commande peut comprendre un détecteur apte à détecter au moins un paramètre dynamique d'au moins une partie du buste de la personne portant l'exosquelette, et un processeur apte à appliquer un signal de commande à un actionneur en fonction d'un paramètre détecté. Cela permet une commande intuitive de l'exosquelette : la commande se fait oublier, l'exosquelette se laisse utiliser de façon naturelle. Il convient de noter que cet aspect ne dépend pas des aspects décrits dans ce qui précède. Par exemple, l'aspect de la commande peut être mis en œuvre sans que l'exosquelette comprenne une liaison pivot cheville telle que définie dans ce qui précède, caractérisée par un axe de pivotement oblique.

Le détecteur peut comprendre au moins un capteur inertiel.

Le processeur peut être configuré pour effectuer plusieurs modes de contrôle, dont : un mode de contrôle de stabilisation dans lequel le processeur contrôle au moins un actionneur pour maintenir la personne portant l'exosquelette en une position de repos, et un mode de contrôle de marche dans lequel le processeur contrôle au moins un actionneur pour assister la personne portant l'exosquelette à faire une marche.

Le processeur peut être configuré pour déterminer une position d'un centre de gravité d'au moins une partie du corps de la personne portant l'exosquelette et appliquer un mode de contrôle en fonction de la position du centre de gravité.

Le processeur peut être configuré pour associer différents modes de contrôle respectivement à différentes zones dans un plan sur lequel le centre de gravité est projeté, le processeur peut ainsi appliquer un mode de contrôle associé à une zone dans laquelle se trouve le centre de gravité.

A titre illustratif, une description détaillée de quelques modes de réalisation de l'invention est présentée dans ce qui suit en référence à des dessins annexes.

### DESCRIPTION SOMMAIRE DES DESSINS

- La figure 1 est une vue schématique de face d'une personne pouvant porter un exosquelette.
- La figure 2 est une vue schématique de côté de la personne.
- La figure 3 est une vue en perspective d'une partie d'un exosquelette comprenant des membres inférieurs.
- La figure 4 est une vue de dos d'une structure de bassin de l'exosquelette.
- La figure 5 est un diagramme schématique de l'exosquelette dans un état de repos.
- La figure 6 est un diagramme schématique de l'exosquelette dans un état actionné au niveau de la structure de bassin.
- La figure 7 est un diagramme schématique de l'exosquelette dans un autre actionné au niveau de la structure de bassin.
- La figure 8 est un diagramme schématique simplifiée de l'exosquelette dans l'état de repos.
- La figure 9 est une vue de dessus de deux structures de pied de l'exosquelette.
- La figure 10 est une vue de dessous d'un plan de support d'une structure de pied gauche de l'exosquelette.
- La figure 11 est un diagramme schématique simplifiée de la structure de pied gauche.
- La figure 12 est une vue en perspective d'une partie inférieure gauche de l'exosquelette comprenant une liaison pivot cheville.
- La figure 13 est un diagramme schématique représentant un axe de pivotement de la liaison pivot cheville.
- La figure 14 est un diagramme schématique représentant un plan de projection pour une sélection de mode de contrôle.

### DESCRIPTION DETAILLEE

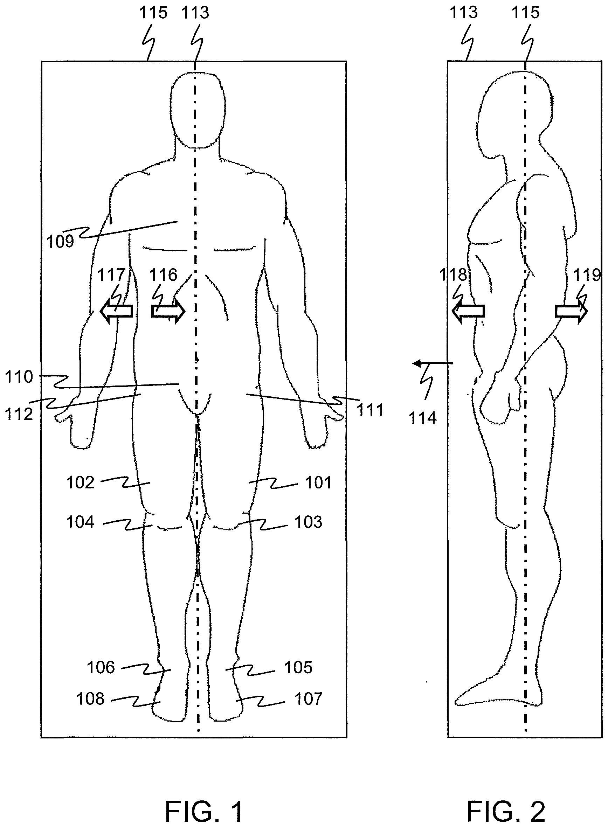

Les figures 1 et 2 illustrent une personne pouvant porter un exosquelette 300. La figure 1 offre une vue schématique de face de la personne. La figure 2 offre une vue schématique de côté de la personne. La personne possède deux jambes, une jambe gauche 101 et une jambe droite 102, avec respectivement un genou gauche 103 et un genou droit 104. La personne possède deux chevilles, une cheville gauche 105 et une cheville droite 106, et deux pieds, un pied gauche 107 et un pied droit 108. La personne possède aussi un buste 109, un bassin 110, des hanches 111, 112 et des reins, ces derniers organes n'étant pas représentés aux figures 1 et 2 pour des raisons de simplicité et de convenance.

Les figures 1 et 2 illustrent également une coupe sagittale médiane 113 de la personne. Cette coupe comprend un axe 114 correspondant à une direction dans laquelle la personne pourrait typiquement effectuer une marche. Cet axe sera dénommé « sens de la marche » dans ce qui suit. Les figures 1 et 2 illustrent en outre une coupe frontale 115 passant par les deux jambes 101, 102. La figure 1 illustre deux orientations : médiale 116 (vers 113) et latérale 117 (à l'opposé de 115). La figure 2 illustre deux autres orientations : antérieure 118 (ou avant) et postérieure 119 (ou arrière).

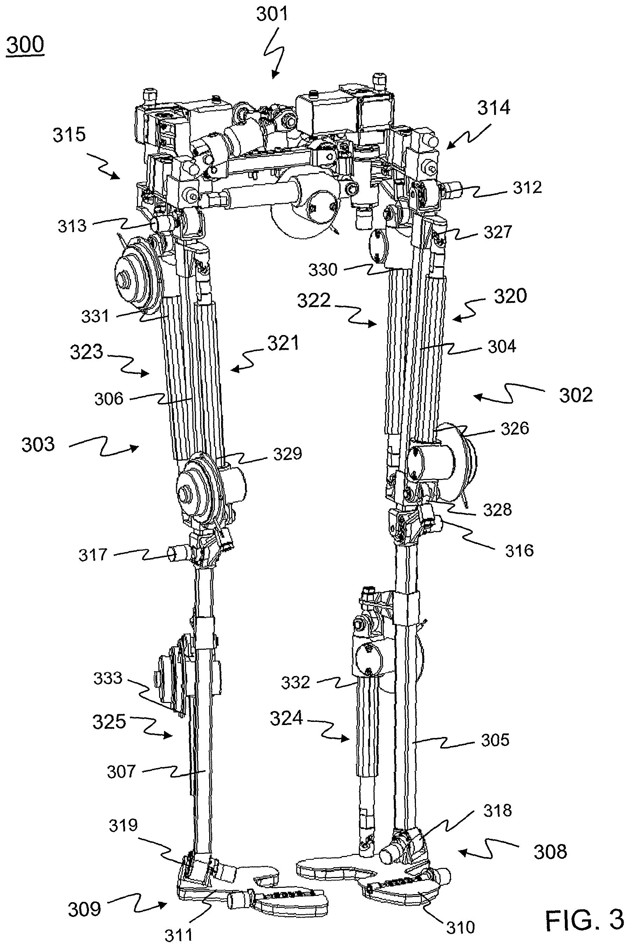

La figure 3 illustre un exosquelette 300 que la personne illustrée aux figures 1 et 2 peut porter. La figure 3 offre une vue en perspective de l'exosquelette 300. L'exosquelette 300 comprend une structure de bassin 301 qui se situe derrière les reins de la personne lorsqu'elle porte l'exosquelette 300. La structure de bassin 301 peut être attachée au bassin 110 illustré à la figure 1. Cette fixation peut être souple au moyen de, par exemple, un harnais ou une ou plusieurs sangles, ou une combinaison de tels éléments. Ces éléments ne sont pas représentés à la figure 3 pour des raisons de simplicité et de convenance.

L'exosquelette 300 comprend en outre deux structures de jambes : une structure de jambe gauche 302 et une structure de jambe droite 303. La structure de jambe gauche 302 est disposée pour côtoyer la jambe gauche 101 de la personne illustrée aux figures 1 et 2. La structure de jambe droite 303 est disposée pour côtoyer la jambe droite 102 de cette personne.

Plus en détails, la structure de jambe gauche 302 comprend un segment de jambe supérieur 304 et un segment de jambe inférieur 305. Le segment de jambe supérieur 304 est disposé pour côtoyer une partie supérieure de la jambe gauche 101 se situant au-dessus du genou gauche 103 de la personne illustrée aux figures 1 et 2. Le segment de jambe inférieur 305 est disposé pour côtoyer une partie inférieure de la jambe gauche 101 se situant en dessous du genou gauche 103. De même, la structure de jambe droite 303 comprend aussi un segment de jambe supérieur 306 et un segment de jambe inférieur 307 illustrés à la figure 3.

L'exosquelette 300 comprend deux structures de pied : une structure de pied gauche 308 et une structure de pied droite 309. La structure de pied gauche 308 comprend un plan de support 310 sur lequel le pied gauche 107 de la personne illustrée aux figures 1 et 2 peut venir en appui lorsque le pied gauche 107 est à plat. De même, la structure de pied droite 309 comprend un plan de support 311 sur lequel le pied droit 108 peut venir en appui lorsque le pied droit 108 est à plat.

L'exosquelette 300 comprend deux structures de hanche : une structure de hanche gauche 314 disposée pour côtoyer une hanche gauche 111 de la personne et une structure de hanche droite 315 disposée pour côtoyer une hanche droite 112 de la personne illustrée aux figures 1 et 2.

L'exosquelette 300 comprend plusieurs liaisons pivot : une paire au niveau des hanches, une paire au niveau des genoux, et une paire au niveau des chevilles.

Plus en détails, la paire de liaisons pivot au niveau des hanches comprend une liaison pivot hanche gauche 312 et une liaison pivot hanche droite 313. La liaison pivot hanche gauche 312 relie la structure de jambe gauche 302 de façon rotative à la structure de hanche gauche 314. De même, la liaison pivot hanche droite 313 relie la structure de jambe droite 303 à la structure de hanche droite 315.

La paire de liaisons pivot au niveau des genoux comprend une liaison pivot genou gauche 316 et une liaison pivot genou droit 317. La liaison pivot genou gauche 316 relie le segment de jambe inférieur 305 de la structure de jambe gauche 302 au segment de jambe supérieur 304 de cette structure. De même, la liaison pivot genou droit 317 relie le segment de jambe inférieur 307 de la structure de jambe droite 303 au segment de jambe supérieur 306 de cette structure.

La paire de liaisons pivot cheville comprend une liaison pivot cheville gauche 318 et une liaison pivot cheville droite 319. La liaison pivot cheville gauche 318 relie la structure de pied gauche 308 à la structure de jambe gauche 302. De même, liaison pivot cheville droite 319 relie la structure de pied droite 309 à la structure de jambe droite 303.

L'exosquelette 300 comprend encore d'autres liaisons pivot. Ces autres liaisons pivot seront présentées et décrites dans ce qui suit.

L'exosquelette 300 comprend plusieurs dispositifs d'actionnement 320-325. Un dispositif d'actionnement est associé à une liaison pivot mentionnée dans ce qui précède. Le dispositif d'actionnement permet aux éléments reliés par la liaison pivot en question d'effectuer un mouvement de rotation l'un par rapport à l'autre. Ainsi, l'exosquelette 300 comprend un dispositif d'actionnement genou gauche 320, un dispositif d'actionnement genou droit 321, un dispositif d'actionnement hanche gauche 322, un dispositif d'actionnement hanche droit 323, un dispositif d'actionnement cheville gauche 324, et un dispositif d'actionnement cheville droite 325.

Le dispositif d'actionnement genou gauche 320, qui est associé à la liaison pivot genou gauche 316, est décrit plus en détail à titre d'exemple. Le dispositif d'actionnement genou gauche 320 comprend un actionneur 326 et deux organes de raccordement rotatifs 327, 328. Un organe de raccordement rotatif 327 relie une extrémité de l'actionneur 326 au segment de jambe supérieur 304 à un point de raccordement relativement éloigné de la liaison pivot genou gauche 316. L'autre organe de raccordement rotatif 328 relie une autre extrémité de l'actionneur 326 au segment de jambe inférieur 305 à un point de raccordement relativement proche de la liaison pivot genou gauche 316, juste en dessous de celle-ci.

L'actionneur 326 est apte à effectuer un mouvement linéaire entre ses extrémités. Ce mouvement linéaire se transforme en un mouvement de rotation du segment de jambe inférieur 305 par rapport au segment de jambe supérieur 304. L'organe de raccordement rotatif 327 peut comprendre un joint de Cardan. L'autre organe de raccordement rotatif 328 peut comprendre une rotule. La figure 3 illustre cet agencement, qui peut être aussi inversé. Un tel agencement permet au dispositif d'actionnement genou gauche 320, ainsi qu'aux segments de jambe, supérieur 304 et inférieur 305, d'effectuer des mouvements utiles, en trois dimensions. Les points de raccordement, mentionnés dans ce qui précède, restent fixes respectivement par rapport au segment de jambe supérieur 304 et par rapport au segment de jambe inférieur 305.

Le dispositif d'actionnement 320 associé à la liaison pivot genou gauche 316 constitue en effet un quadrilatère ayant un segment de longueur variable. Ce segment est l'actionneur 326 qui peut être sous forme d'un vérin. Ce vérin peut être, par exemple, un vérin électrique, hydraulique, pneumatique ou tout autre type d'actionneur linéaire. Le vérin a une longueur ajustable au moyen d'un signal de contrôle appliqué au vérin. L'actionneur 326 associé à la liaison pivot genou gauche 316 sera désigné par « actionneur genou gauche 326 » dans ce qui suit pour des raisons de clarté et de convenance.

Les autres dispositifs d'actionnement 321-325 mentionnés dans ce qui précède ont une structure similaire et fonctionnent donc de façon similaire. Ces dispositifs d'actionnement comprennent aussi des actionneurs 329-333 représentés à la figure 3. Ces actionneurs seront respectivement désignés par « actionneur genou droit 329 », « actionneur hanche gauche 330 », « actionneur hanche droite 331 », « actionneur cheville gauche 332 », et « actionneur cheville droite 333 » dans ce qui suit pour des raisons de clarté et de convenance. L'adjectif d'une telle désignation indique la liaison pivot à laquelle l'actionneur est associé.

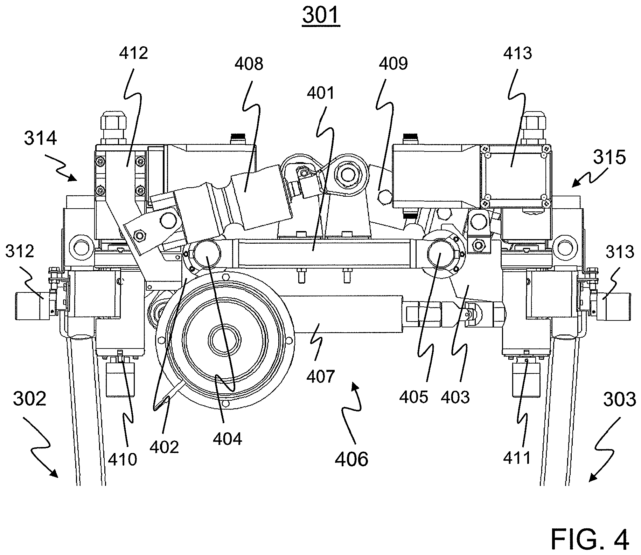

La figure 4 illustre la structure de bassin 301 de l'exosquelette 300 plus en détails. Cette figure offre une vue de dos de la structure de bassin 301. La structure de bassin 301 comprend un segment de bassin central 401 disposé pour être attaché au bassin 110 de la personne illustrée aux figures 1 et 2. Le segment de bassin central 401 peut donc comprendre un ou plusieurs organes de fixation, telle qu'un harnais ou une ou plusieurs sangles, comme il a été mentionné dans ce qui précède.

La structure de bassin 301 comprend une paire de segments de bassin périphériques : un segment de bassin périphérique gauche 402, et un segment de bassin périphérique droit 403.

La structure de bassin 301 comprend une paire de liaisons pivot : une liaison pivot bassin gauche 404 et une liaison pivot bassin droite 405. La liaison pivot bassin gauche 404 relie le segment de bassin périphérique gauche 402 au segment de bassin central 401. La liaison pivot bassin droite 405 relie le segment de bassin périphérique droit 403 au segment de bassin central 401. Ces liaisons pivot bassin, gauche 404 et droite 405, présentent chacune un axe de pivotement horizontal lorsque l'exosquelette 300 est en position de repos.

La structure de bassin 301 comprend en outre une paire de liaisons pivot orientation jambe : une liaison pivot orientation jambe gauche 410 et une liaison pivot orientation jambe droite 411. La liaison pivot orientation jambe gauche 410 relie le segment de bassin périphérique gauche 402 à la structure de hanche gauche 314. La liaison pivot orientation jambe droite 411 relie le segment de bassin périphérique droit 403 à la structure de hanche droite 315. Les liaisons pivot orientation jambe, gauche 410 et droite 411, présentent un axe de pivotement vertical lorsque l'exosquelette 300 est en position de repos.

Un dispositif d'actionnement 406 est associé à la paire de liaisons pivot bassin 404, 405. Ce dispositif comprend un actionneur 407 et deux articulations. Une articulation gauche relie une extrémité gauche de l'actionneur 407 à une bielle du segment de bassin périphérique gauche 402. Une articulation droite relie une extrémité droite de l'actionneur 407 à une bielle du segment de bassin périphérique droit 403. L'actionneur 407 peut être sous forme d'un vérin. Ce vérin peut être, par exemple, un vérin électrique, hydraulique, pneumatique ou tout autre type d'actionneur linéaire. L'actionneur sera désigné par « actionneur bassin 407 » dans ce qui suit pour des raisons de clarté et de convenance. L'actionneur bassin 407 a une longueur ajustable au moyen d'un signal de contrôle appliqué à l'actionneur bassin 407.

Un dispositif de blocage gauche 408 est associé à la liaison pivot bassin gauche 404. Le dispositif de blocage gauche 408 est commutable entre un état déverrouillé et un état verrouillé. Dans l'état déverrouillé, le dispositif de blocage gauche 408 permet un pivotement du segment de bassin périphérique gauche 402 par rapport au segment de bassin central 401. Ce pivotement est possible grâce à la liaison pivot bassin gauche 404. En revanche, dans l'état verrouillé, le dispositif de blocage gauche 408 empêche un tel pivotement. Dans cet état, le segment de bassin périphérique gauche 402 est rigidement relié au segment de bassin central 401.

De façon similaire, un dispositif de blocage droit 409 est associé à la liaison pivot bassin droite 405. Le dispositif de blocage droit 409 est également commutable entre un état déverrouillé et un état verrouillé afin, respectivement, de permettre et d'empêcher un pivotement du segment de bassin périphérique droit 403 par rapport au segment de bassin central 401.

Cet agencement de la structure de bassin 301 permet des mouvements de rotation latéraux au niveau du bassin 110. Un tel mouvement de rotation s'effectue soit du côté gauche de la structure de bassin 301, soit du côté droit, à un instant donné. Cela en fonction d'un blocage respectivement de la liaison pivot bassin droite 405 ou la liaison pivot bassin gauche 404. Ces mouvements de rotation latéraux peuvent intervenir dans un processus de stabilisation de la personne portant l'exosquelette lorsque cette personne est debout et à l'arrêt. Ce processus sera décrit plus en détails dans ce qui suit.

Les mouvements de rotation latéraux peuvent aussi avantageusement intervenir dans un processus de marche : la personne portant l'exosquelette marche en ligne droite. Ces mouvements s'effectuent alors en alternance du côté gauche et du côté droit d'une façon qui peut être régulière. Ils fournissent des impulsions gauche-droite au niveau du bassin 110 lors du processus de marche. Ces mouvements contribuent ainsi à un équilibre dynamique d'un mouvement de marche vers l'avant. En fait, un processus de marche se caractérise généralement par une asymétrie des appuis au sol: pied gauche 107 puis pied droit 108. Les mouvements de rotation latéraux, et en alternance gauche-droite, contribuent à compenser dynamiquement cette asymétrie.

La liaison pivot bassin gauche 404 peut comprendre un membre élastiquement déformable. La liaison pivot bassin droite 405 peut également comprendre un membre élastiquement déformable. Ces membres élastiquement déformables peuvent comprendre, par exemple, un ou plusieurs ressorts de torsion. Ils seront respectivement désignés par « ressort de bassin gauche » et « ressort de bassin droit » dans ce qui suit pour des raisons de convenance.

Le ressort de bassin gauche peut emmagasiner de l'énergie cinétique lorsque le segment de bassin périphérique gauche 402 effectue un pivotement par rapport au segment de bassin central 401 à partir d'une position de repos. Cette énergie peut être réinjectée lorsque le segment de bassin périphérique gauche 402 effectue un pivotement inverse. Cela permet de réduire une puissance consommée par l'actionneur bassin 407 ; le ressort de bassin gauche peut assister l'actionneur bassin 407 à effectuer le pivotement inverse. Les mêmes remarques s'appliquent au ressort de bassin droit, qui peut emmagasiner de l'énergie cinétique lorsque le segment de bassin périphérique droit 403 effectue un pivotement.

La structure de bassin 301 illustré à la figure 4 et décrite dans ce qui précède est particulièrement adaptée à une reproduction artificielle d'une marche humaine. Un processus d'affaissement du bassin 110 intervient dans la marche humaine, du côté d'une jambe oscillante effectuant un pas vers l'avant. Pendant une phase de basculement vers l'avant et de propulsion, le pied de l'autre jambe, qui sert d'appui, se plie et la cheville passe en flexion plantaire. Sans affaissement du bassin 110, le centre de gravité du corps humain aurait alors tendance à s'élever mécaniquement, ce qui est consommateur d'énergie tout autant que superflu.

La structure de bassin 301 est adaptée pour s'affaisser latéralement du côté de la jambe oscillante. Cet affaissement peut s'effectuer en mettant en œuvre des masses présentes de ce côté. Il en résulte une chute locale par gravité, qui est contrôlée par la structure de bassin 301, notamment par l'actionneur bassin 407. Cela a pour effet de diminuer une élévation globale du centre de gravité qui se produirait sans affaissement du bassin 110. De plus, la chute locale par gravité libère de l'énergie dont une partie est stockée dans le ressort de bassin dans la liaison pivot bassin laissée libre.

Puis, quand la jambe oscillante entre en contact avec le sol à la fin du pas, le côté de la structure de bassin 301 qui s'était affaissé est relevé. L'énergie stockée dans le ressort peut alors être mise à contribution. Les actionneurs de l'exosquelette 300 associés à la jambe oscillante qui vient d'entrer en contact avec le sol, aident aussi à relever le bassin 110. L'actionneur bassin 407, qui entre aussi en jeu, n'est n'est donc pas seul à agir. Il suffit que l'actionneur bassin 407 ne fournisse qu'une partie de l'énergie nécessaire pour relever la structure de bassin 301. L'actionneur bassin 407 peut ainsi être un dispositif à relativement basse puissance et, de ce fait, de relativement faibles dimensions. Cela permet des réalisations compactes de la structure de bassin 301.

Les liaisons pivot orientation jambe 410, 411 sont actionnées. Un actionneur 412 est associé à la liaison pivot orientation jambe gauche 410. De même, un actionneur 413 est associé à la liaison pivot orientation jambe droite 411. Ces actionneurs 412, 413 peuvent chacun être sous forme d'un motoréducteur électrique comprenant un moteur électrique et un ou plusieurs étages de réduction. Ces étages de réduction couplent le moteur électrique à la liaison pivot orientation jambe concernée. Les étages de réductions peuvent comprendre, par exemple, un ou plusieurs engrenages, un ou plusieurs réducteurs à roue et vis sans fin, un ou plusieurs réducteurs épicycloïdaux et tout autre type de réducteur mécanique. Les actionneurs 412, 413 seront respectivement désignés «actionneur orientation jambe gauche 412 » et « actionneur orientation jambe droite 413 » dans ce qui suit pour des raisons de clarté et de convenance.

La liaison pivot orientation jambe gauche 410 permet donc une rotation verticale motorisée de la structure de jambe gauche 302 par rapport au segment de bassin central 401. De même, la liaison pivot orientation jambe droite 411 permet une rotation verticale motorisée de la structure de jambe droite 303 par rapport au segment de bassin central 401. Ces rotations verticales peuvent intervenir dans un processus de stabilisation et dans un processus de marche. Les rotations verticales contribuent à ce que ces processus soient efficaces et perçus comme étant naturels par la personne portant l'exosquelette.

Par exemple, une rotation verticale de la structure de jambe gauche 302 permet de convenablement orienter la structure de pied gauche 308 pour effectuer un virage à gauche. De même, une rotation verticale de la structure de jambe droite 303 peut contribuer à une prise de virage à droite. Dans d'autres cas, les liaisons pivot orientation jambe 410, 411 permettent de faire pivoter la structure de bassin 301 par rapport à une jambe. Cela permet un transfert de poids vers la gauche ou vers la droite. Ce transfert de poids peut avantageusement intervenir pour initialiser un mouvement de pas ; le poids est transféré vers une jambe porteuse. Un équilibrage en position debout implique aussi typiquement un transfert de poids dans lequel les liaisons pivot orientation jambe 410, 411 peuvent jouer un rôle. Les liaisons pivot orientation jambe 410, 411 peuvent aussi intervenir dans un processus de marche. Une rotation verticale de la structure de bassin 301 par rapport à une jambe porteuse permet d'allonger un pas et, en conséquence, de rendre le processus de marche plus efficace.

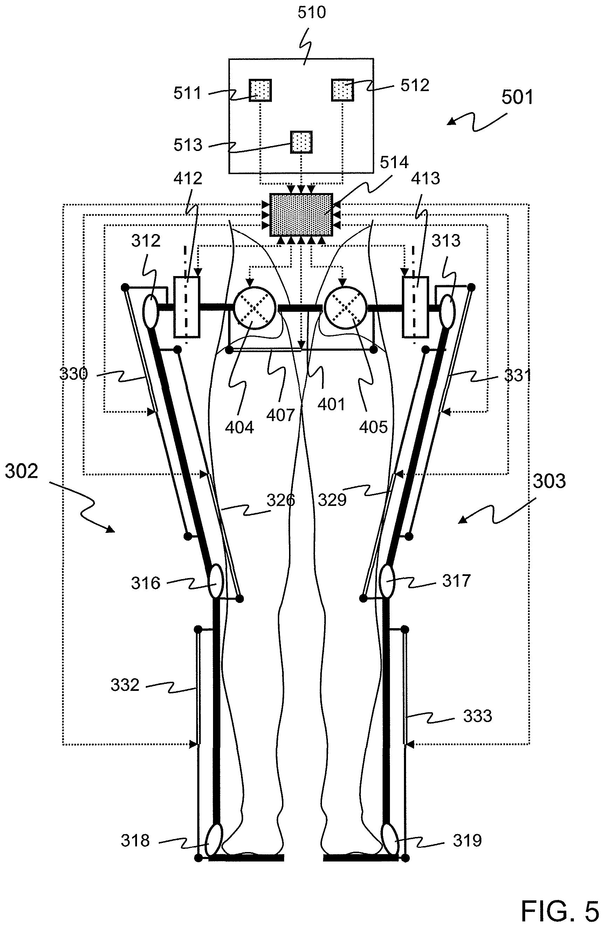

La figure 5 illustre l'exosquelette 300 dans un état de repos. L'exosquelette 300 est représenté par un diagramme schématique. Des éléments identiques ou similaires à ceux présentés dans ce qui précède sont repérés par des signes de référence identiques.

L'exosquelette 300 comprend un dispositif de commande 501 apte à commander divers actionneurs : l'actionneur bassin 407, l'actionneur orientation jambe gauche 412, l'actionneur orientation jambe droite 413, , l'actionneur genou gauche 326, l'actionneur genou droit 329, l'actionneur hanche gauche 330, l'actionneur hanche droite 331, l'actionneur cheville gauche 332, et l'actionneur cheville droite 333. Le dispositif de commande 501 peut également commander le dispositif de blocage gauche 408 et le dispositif de blocage droit 409, illustrés à la figure 4, associés respectivement à la liaison pivot bassin gauche 404 et à la liaison pivot bassin droite 405. Le dispositif de commande 501 peut commander un quelconque des éléments précités au moyen d'un signal de commande transmis à l'élément concerné. Cette transmission peut se faire de façon filaire ou non filaire.

Le dispositif de commande 501 comprend un détecteur 510 apte à détecter un paramètre dynamique d'une partie du corps de la personne portant l'exosquelette. Cette partie du corps est de préférence libre de l'exosquelette 300, c'est-à-dire non reliée à celui-ci. Cette partie de corps peut être, par exemple, le buste 109 de la personne portant l'exosquelette illustré à la figure 1. Dans ce cas, le paramètre dynamique peut comprendre une position du buste 109, une vitesse de déplacement du buste 109, ou une accélération du buste 109.

Le détecteur 510 peut comprendre un ensemble de capteurs inertiels 511, 512, 513. Par exemple, deux capteurs inertiels 511, 512 peuvent être situés sur la poitrine de la personne portant l'exosquelette. Un autre capteur inertiel 513 peut être situé au niveau du nombril. Cet endroit correspond à un centre de gravité naturel pour une personne humaine. L'ensemble de capteurs inertiels 511, 512, 513 définit, en effet, un triangle. Cette disposition permet de détecter de nombreuses positions, ou de nombreux mouvements, du buste 109 par rapport aux jambes 101, 102, et donc par rapport à l'exosquelette 300. Par exemple, l'ensemble de capteurs inertiels 511, 512, 513 peut détecter les positions suivantes du buste 109 : penché en avant, penché en arrière, penché sur le côté droit, penché sur le côté gauche. L'ensemble de capteurs inertiels 511, 512, 513 peut également détecter un état de balancement du bassin 110 lors d'un processus de marche, ou encore une rotation du buste 109.

Le dispositif de commande 501 comprend un processeur 514 qui reçoit un ou plusieurs signaux de détection du détecteur 510. Ces signaux de détection indiquent une position ou un mouvement du buste 109. Le processeur 514 peut ainsi appliquer un signal de commande à un ou plusieurs des actionneurs 407, 412, 413, 326, 329-333 mentionnés dans ce qui précède en fonction de la position, ou du mouvement, du buste 109 de la personne portant l'exosquelette.

Par ailleurs, le processeur 514 peut aussi recevoir des signaux en provenance des actionneurs, donnant des informations sur ceux-ci. Le processeur 514 peut prendre ces signaux en compte pour établir des signaux de commande. En se faisant, le processeur 514 peut mettre en œuvre une boucle d'asservissement pour un actionneur. Le processeur 514 peut déterminer une valeur de consigne pour cette boucle d'asservissement, et donc l'actionneur en question, à partir des signaux de détection en provenance du détecteur 510.

Plus spécifiquement, le processeur 514 peut adjoindre un mode de fonctionnement spécifique de l'exosquelette 300 à une position ou un mouvement du buste 109. Le processeur 514 peut ensuite générer un ou plusieurs signaux de commande appropriée pour un ou plusieurs actionneurs. Par exemple, le processeur 514 peut interpréter la position « penché en avant » en une la volonté d'avancer. Dans ce cas, le processeur 514 commande les actionneurs de l'exosquelette 300 de sorte qu'un mouvement vers l'avant est effectué. Cela peut correspondre à un mode de fonctionnement « marche vers l'avant ». Le processeur 514 peut également employer les signaux de détection pour effectuer un balancement de la structure de bassin 301 lors de cette marche. Le processeur 514 peut ainsi stabiliser la personne portant l'exosquelette dans sa marche vers l'avant et agir sur l'exosquelette 300 si des corrections sont nécessaires. Dans un autre exemple, le processeur 514 peut interpréter une détection de mouvements relativement brusques comme un besoin de rééquilibrer l'exosquelette 300.

Un tel dispositif de commande 501 présente plusieurs avantages. La personne peut commander l'exosquelette 300 de façon intuitive. Cette commande se fait oublier ; l'exosquelette 300 se laisse utiliser de façon naturelle. L'exosquelette 300 et sa commande reproduisent un mécanisme de « chute rattrapée » caractéristique d'une marche humaine. Cela apporte aussi un avantage d'ordre énergétique : l'exosquelette 300 peut utilement utiliser une énergie produite par une chute en avant dans un processus de marche. Cela permet de réduire une demande en puissance électrique pour mettre en œuvre ce processus.

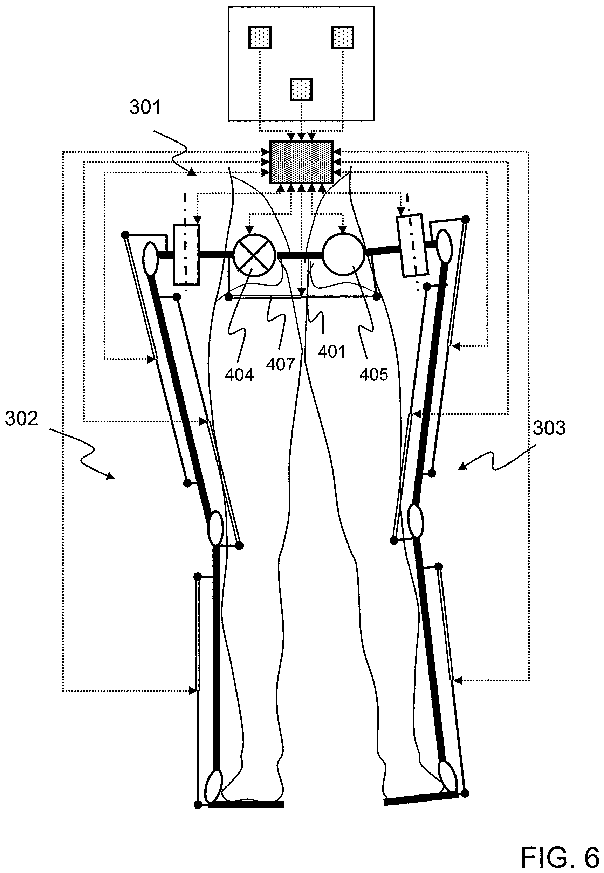

La figure 6 illustre l'exosquelette 300 dans un état actionné au niveau de la structure de bassin 301. L'exosquelette 300 est représenté par un diagramme schématique similaire à celui de la figure 5. Dans l'état actionné illustré à la figure 6, la structure de jambe droite 303 s'incline légèrement latéralement. Pour ce faire, la liaison pivot bassin droite 405 est dans l'état déverrouillé, tandis que la liaison pivot bassin gauche 404 est dans l'état verrouillé. L'actionneur bassin 407 s'élargit en longueur sous commande du processeur 514. Les deux extrémités de l'actionneur bassin 407 s'éloignent provoquant ainsi un pivotement du segment de bassin périphérique droit 403 par rapport au segment de bassin central 401.

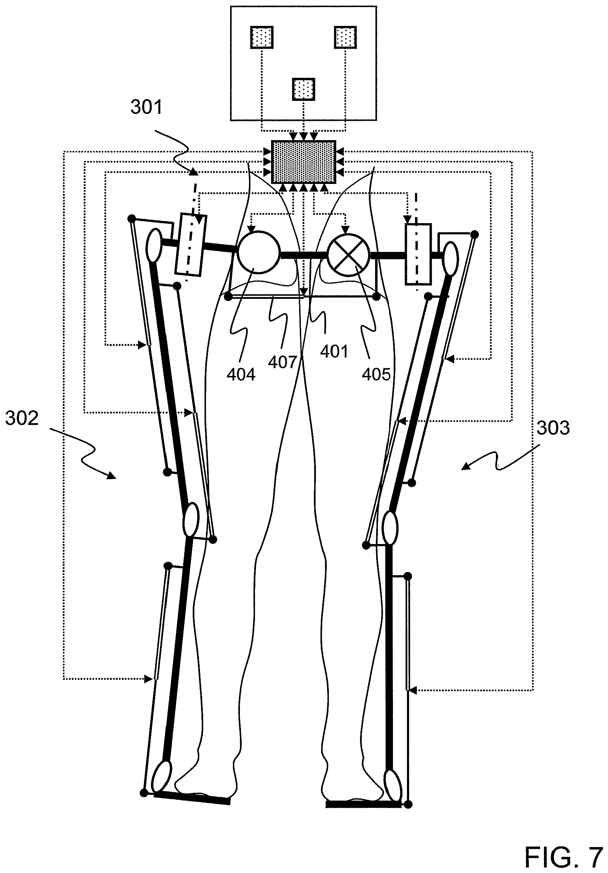

La figure 7 illustre l'exosquelette 300 dans un autre état actionné au niveau de la structure de bassin 301. L'exosquelette 300 est représenté par un diagramme schématique similaire à ceux des figures 5 et 6. Dans l'état actionné illustré à la figure 7, qui peut être considéré l'inverse de celui représenté à la figure 6, c'est la structure de jambe gauche 302 qui s'incline légèrement latéralement. Pour ce faire, la liaison pivot bassin gauche 404 est dans l'état déverrouillé, tandis que la liaison pivot bassin droite 405 est dans l'état verrouillé. Ici aussi, l'actionneur bassin 407 élargit en longueur sous commande du processeur 514. Les deux extrémités de l'actionneur bassin 407 s'éloignent provoquant dans ce cas un pivotement du segment de bassin périphérique gauche 402 par rapport au segment de bassin central 401.

Les états actionnés illustrés aux figures 6 et 7 peuvent intervenir, par exemple, lors d'un processus de stabilisation, la personne portant l'exosquelette étant en position debout, statique, ou lors d'un processus de marche. Ces processus peuvent comprendre une multitude de mouvements. Un mouvement au niveau des chevilles, notamment latéral, oriente le haut du corps. Ce mouvement se combine typiquement avec des mouvements au niveau de la structure de bassin 301, qui ne se limite pas nécessairement à ceux illustrés aux figures 6 et 7.

Un processus de stabilisation, ou un processus de marche, implique typiquement un transfert du poids du corps de la personne portant l'exosquelette. Par exemple, un transfert du poids du corps vers la gauche ou, le cas échéant, vers la droite, est important pour démarrer le processus de marche. La liaison pivot orientation jambe gauche 410 ou, le cas échéant, la liaison pivot orientation jambe droite 411 intervient dans ce transfert du poids. Ces liaisons pivot orientation jambe 410, 411 permettent à la structure de bassin 301 d'effectuer un mouvement de rotation par rapport à une jambe d'appui, ce qui entraîne le transfert du poids. En transférant le poids du corps sur un pied, l'autre pied est libéré et peut ainsi quitter le sol. Le transfert du poids peut aussi intervenir dans le processus de stabilisation, en réaction à des perturbations extérieures, pour un rééquilibrage en position debout.

Lors d'un transfert de poids, l'exosquelette 300 peut être amené à effectuer plusieurs types de rotations au niveau du bassin 110 de la personne portant l'exosquelette. Il existe trois rotations par rapport à chaque jambe. Des rotations selon un axe vertical peuvent s'effectuer au moyen de la liaison pivot orientation jambe gauche 410 et de la liaison pivot orientation jambe droite 411. Des rotations selon un axe horizontal, perpendiculaire à la coupe frontale 115 illustrée aux figures 1 et 2, peuvent s'effectuer au moyen de la liaison pivot bassin gauche 404 et de la liaison pivot bassin droite 405. Des rotations selon un axe horizontal, perpendiculaire à la coupe sagittale médiane 113 illustrée aux figures 1 et 2, peuvent s'effectuer au moyen de la liaison pivot hanche gauche 312 et de la liaison pivot hanche droite 313.

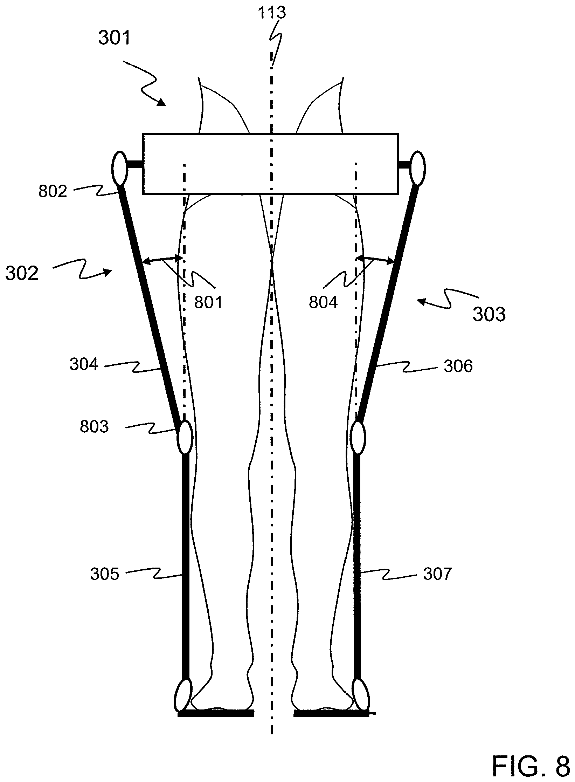

La figure 8 illustre encore de l'exosquelette 300 dans l'état de repos. La figure 8 est un diagramme schématique simplifié par rapport à la figure 5. La figure 8 illustre que le segment de jambe supérieur 304 de la structure de jambe gauche 302 présente une inclinaison 801 par rapport au segment de jambe inférieur 305 lorsque l'exosquelette 300 est dans l'état de repos. Cette inclinaison 801 est non nulle de sorte qu'une extrémité haute 802 du segment de jambe supérieur 304 gauche soit plus éloignée de la coupe sagittale médiane 113 de la personne portant l'exosquelette qu'une extrémité basse 803. L'inclinaison 801 peut être comprise dans une plage de 0° à 30°, de préférence entre 0° et 20°. Les mêmes remarques s'appliquent au segment de jambe supérieur 306 de la structure de jambe droite 303, qui présente une inclinaison 804 par rapport au segment de jambe inférieur 307.

L'inclinaison 801, 804 des segments de jambe supérieurs, gauche 304 et droit 306, reproduit une inclinaison naturelle. Les fémurs d'un humain sont typiquement inclinés par rapport à la verticale lorsque l'humain est en position normale, debout. En reproduisant cette inclinaison, l'exosquelette 300 est à même d'effectuer un transfert de poids vers un pied de façon plus rapide et plus économe en énergie, par rapport à une structure sans de telles inclinaisons. L'inclinaison réduit un déplacement du centre de gravité qui est nécessaire pour que celui-ci se trouve au-dessus d'un pied d'appui.

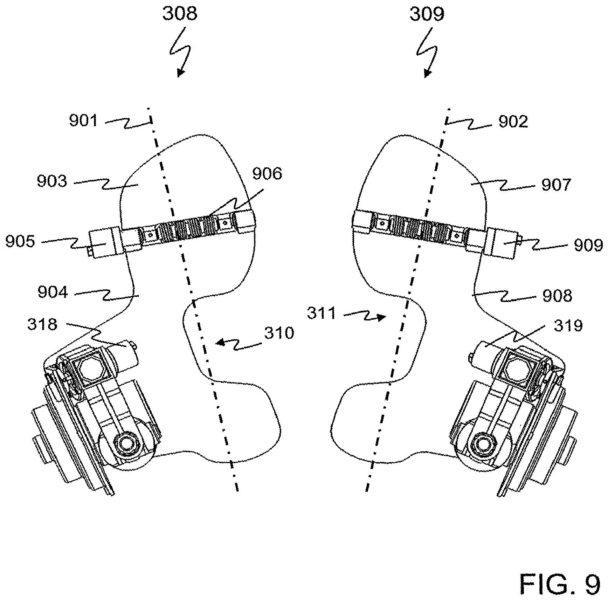

La figure 9 illustre plus en détails les deux structures de pied 308, 309 de l'exosquelette 300. La figure 9 offre une vue de dessus de ces deux structures de pied : la structure de pied gauche 308 et la structure de pied droite 309. Le plan de support 310 de la structure de pied gauche 308 présente un axe longitudinal médian 901 indiqué à la figure 9. De même, le plan de support 311 de la structure de pied droite 309 présente un axe longitudinal médian 902 aussi indiqué à cette figure.

Par axe longitudinal médian 901 (respectivement 902), on comprendra dans ce qui suit l'axe de la structure de pied gauche 308 (respectivement droit 309) compris dans le plan de support 311 et s'étendant en regard du deuxième rayon du pied de l'utilisateur, lorsque un utilisateur place son pied sur la structure de pied gauche 308 (respectivement droit 309).

Le plan de support 310 de la structure de pied gauche 308 comprend une plate-forme avant 903 et une plate-forme arrière 904. L'axe longitudinal médian 901 (respectivement 902) s'étend donc sensiblement entre la zone correspondant au talon de la structure de pied gauche 308 (respectivement droit 309) et le bord 1004 de la plateforme avant 903.

Une liaison pivot pied 905, qui s'étend suivant un axe de pivotement 1101, relie la plate-forme avant 903 à la plate-forme arrière 904. La plate-forme arrière 904 est reliée à la liaison pivot cheville gauche 318. La liaison pivot pied 905 comprend un membre élastiquement déformable 906, qui peut être sous forme d'un ressort de torsion. Ce membre élastiquement déformable sera dénommé « ressort de torsion 906 » dans ce qui suit pour des raisons de convenance. Le ressort de torsion 906 est capable d'emmagasiner de l'énergie sous forme potentielle lorsque la plate-forme avant 903 est pliée par rapport à la plate-forme arrière 904. Le plan de support 311 de la structure de pied droite 309 a une structure similaire, comprenant comprend une plate-forme avant 907, une plate-forme arrière 908, et une liaison pivot pied 909.

La liaison pivot pied 905 constitue une cassure du plan de support 310 permettant un mouvement de marche plus fluide, moins saccadé, plus naturel et plus rapide par rapport à un plan de support en une seule partie, sans cassure. Lors d'un processus de marche, un plan de support en une seule partie, sans cassure, devrait quitter le sol, soit parallèlement à ce sol, soit en terminant par un appui ponctuel ou linéique très difficilement contrôlable. La liaison pivot pied 905 contribue donc à reproduire plus fidèlement une fonction de marche que la personne portant l'exosquelette a perdue. Cela contribué aussi à une acceptation plus facile de l'exosquelette 300 par la personne le portant, ainsi qu'une accommodation plus facile et plus rapide.

Un autre avantage de la liaison pivot pied 905 consiste en un effet de propulsion vers l'avant lorsque la plate-forme arrière 904 décolle du sol, tandis que la plate-forme avant 903 continue à être en appui sur le sol. La cassure, formée par la liaison pivot pied 905, constitue un axe de rotation pour un mouvement de chute contrôlée. Cet axe de rotation permet d'ajouter une composante de translation vers l'avant au mouvement de chute contrôlée. Cet effet de propulsion vers l'avant est important dans une marche dynamique d'un être humain. L'effet permet d'allonger un pas d'une façon énergétiquement efficace.

Le ressort de torsion 906 permet de récupérer une partie de l'énergie potentielle qui se libère lors de la chute vers l'avant. En effet, le ressort de torsion 906 présente une raideur qui est contrée par la chute vers l'avant. Le ressort de torsion 906 stocke cette énergie pour la restituer lorsque la structure de pied gauche 308 décolle du sol en fin de pas. La description relative à la structure de pied gauche 308 dans ce qui précède, s'applique mutatis mutandis à la structure de pied droite 309.

On notera que l'axe longitudinal médian 901 (respectivement 902), l'axe de pivotement 1101 et la coupe sagittale médiane forment un triangle, dans lequel un angle entre l'axe de pivotement 1101 et l'axe longitudinal médian 901 (respectivement 902) est de préférence compris entre 60° et 125° environ, par exemple entre 95° et 105°.

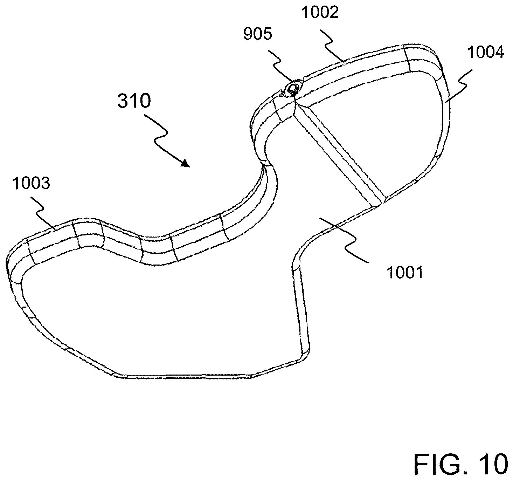

La figure 10 illustre d'autres aspects de la structure de pied gauche 308 qui s'appliquent également à la structure de pied droite 309. La figure 10 offre une vue de dessous et en perspective du plan de support 310 de cette structure de pied. Le plan de support 310 comprend une semelle souple 1001 apte à entrer en contact avec le sol. Cette semelle souple 1001 se trouve en-dessous d'une armature rigide, qui peut être sous forme de deux plaques métalliques 1002, 1003 reliées l'une à l'autre par la liaison pivot pied 905.

La semelle souple 1001 présente une surface apte à entrer en contact avec le sol. Cette surface est délimitée par des bords arrondis 1004 clairement représentés à la figure 10. Ces arrondis 1004 de la semelle souple 1001 se situent notamment aux extrémités du pied et sur les côtés. Les arrondis 1004 permettent de fluidifier plus encore un mouvement vers l'avant. Les arrondis 1004 de la semelle sur ses côtés permettent aux pieds de rouler légèrement sur ces côtés, notamment lorsque la structure de bassin 301 produit des impulsions latérales afin d'équilibrer un mouvement parasite latéral, en position debout à l'arrêt.

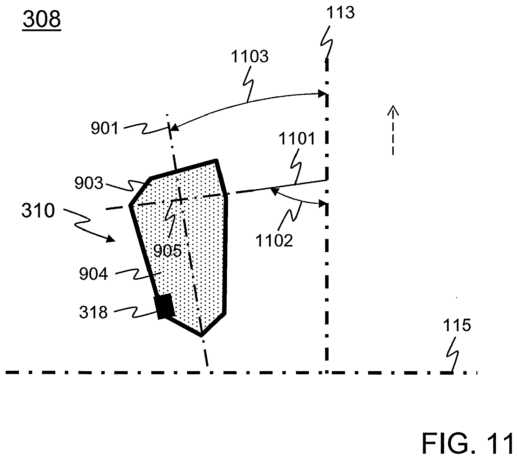

La figure 11 illustre encore la structure de pied gauche 308. La figure 11 est un diagramme schématique simplifiée par rapport à la figure 9. La figure 11 illustre que l'axe de pivotement 1101 de la liaison pivot pied 905 se situe dans un quadrant délimité par la coupe sagittale médiane 113 de la personne portant l'exosquelette et la coupe frontale 115 passant par la jambe. La figure 11 illustre en outre que la plate-forme arrière 904 est plus proche de la coupe sagittale médiane 113 que la plate-forme avant 903. L'axe longitudinal médian 901 du plan de support 310 présente alors un angle 1103 non nul compris entre 0° et 45° par rapport à la coupe sagittale médiane 113 lorsque l'exosquelette 300 est en position de repos. Cette plage d'angles peut aussi avoir une limite inférieure plus élevée, par exemple, d'un ou quelques degrés.

La structure de pied gauche 308 de l'exosquelette 300 est donc orientée vers l'extérieur d'un angle, qui peut être de 15°, par rapport à une direction sagittale plutôt que d'être orienté tout droit dans la direction sagittale.

Dans une forme de réalisation, l'axe longitudinal médian 901 du plan de support 310 présente un angle 1103 compris entre 5° et 35° par rapport à la coupe sagittale médiane 113 lorsque l'exosquelette 300 est en position de repos. Cette plage angulaire permet ainsi d'optimiser le mouvement de l'exosquelette lors de la marche. Un angle compris entre 15° et 20° donne des résultats particulièrement satisfaisants, dans la mesure où cette plage d'angles correspond à l'angle moyen du pied d'un être humain par rapport à sa coupe sagittale médiane lorsqu'il marche.

Cette orientation des structures de pied 308, 309, avec un angle 1103 compris entre 5° et 35° par rapport à la coupe sagittale médiane 113 lorsque l'exosquelette 300 est en position de repos, par exemple entre 15 et 20°, permet d'obtenir un exosquelette dont la structure et le mouvement sont plus proches de la biomécanique humaine qu'un exosquelette dont l'axe longitudinal médian est parallèle à la coupe sagittale médiane (correspondant au cas où l'angle 1103 est nul). Un tel exosquelette est par conséquent plus confortable pour l'utilisateur et reproduit de manière plus fiable la marche humaine.

Cette orientation vers l'extérieur permet donc de mieux reproduire une marche humaine puisque les pieds humains sont également orientés de cette manière. De plus, lors d'un pas, pendant une phase de poussée, cette orientation du pied permet de mieux diriger la poussée en y introduisant une composante latéro-médiale, ce qui permet de propulser le corps de la personne portant l'exosquelette d'un pied porteur vers un pied récepteur.

Cette orientation angulaire des structures de pied 308, 309 permet en outre d'agrandir le polygone de sustentation des structures de pied 308, 309 vis-à-vis du sol (c'est-à-dire leur surface d'appui qui est en contact avec le sol). En effet, dans l'exosquelette de l'invention (comme pour un être humain), les plateformes arrière 902 des structures de pieds 308, 309 (ainsi que les chevilles et les segments tibiaux) sont plus proches que les hanches afin réduire l'énergie nécessaire lors de la marche de l'exosquelette, ce qui a tendance à réduire le polygone de sustentation et s'oppose donc à une bonne stabilité d'un utilisateur lorsque celui-ci se tient debout, les deux pieds au sol. Le fait d'orienter les structures de pied 308, 309 vers l'extérieur (en formant un angle 1103 non nul) permet d'augmenter la surface de ce polygone de sustentation et donc d'améliorer la stabilité de l'utilisateur lorsque celui-ci est debout pieds au sol.

Dans une forme de réalisation, la liaison pivot pied 905 peut présenter un axe de pivotement 1101 définissant un triangle rectangle dans le quadrant délimité par la coupe sagittale médiane 113 de la personne portant l'exosquelette et la coupe frontale 115 passant par la jambe. L'axe de pivotement 1101 peut notamment un angle 1102 compris dans une plage de 45° à 90° par rapport à la coupe sagittale médiane 113, de préférence compris entre 50° et 85°, par exemple de l'ordre de 60 à 65°.

Dans le cas où l'axe longitudinal médian forme un angle 1103 compris entre 5° et 35° avec la coupe sagittale médiane lorsque l'exosquelette 300 est en position de repos, un angle 1102 de l'axe de pivotement 1101 compris entre 60° et 65° par rapport à la coupe sagittale correspond sensiblement à l'angle moyen formé par la première et la cinquième articulation métatarsienne.

Une telle orientation de l'axe de pivotement 1101 de la liaison pivot pied 905 permet d'adapter la structure de pied 308, 309 de l'exosquelette à la structure du pied humain en tenant compte de l'orientation de la cassure du pied au niveau des articulations métatarsiennes, ce qui augmente le confort et la sécurité de l'utilisateur. Elle permet en outre de réaliser la transmission des efforts de propulsion tout en assurant la stabilité de l'utilisateur et de l'exosquelette.

De plus, lors du mouvement de la marche, une orientation de l'axe de pivotement 1101 de la liaison pivot pied 905 comprise entre 50° et 85° permet de garantir un bon positionnement spatial de la cheville, du tibia et du genou lorsque la plateforme arrière pivote autour de la liaison pivot 905 (c'est-à-dire lorsque la structure de pied 308, 309 est « cassée »).

La figure 11 illustre que la liaison pivot pied 905, qui forme la cassure de la structure de pied gauche 308, est orientée de manière à être quasi perpendiculaire à la coupe sagittale, c'est-à-dire quasi perpendiculaire à l'axe de la marche. Dans cet exemple, la liaison pivot pied 905 n'est donc pas perpendiculaire à l'axe longitudinal médian 901 du plan de support 310 de la structure de pied gauche 308. Cette orientation de la liaison pivot pied 905 permet un basculement de l'exosquelette 300, ainsi que la personne qui le porte, vers l'avant dans le sens de la marche. La liaison pivot cheville gauche 318 joue également un rôle dans ce basculement ayant une orientation antéro-médiale, ce qui sera décrit dans ce qui suit.

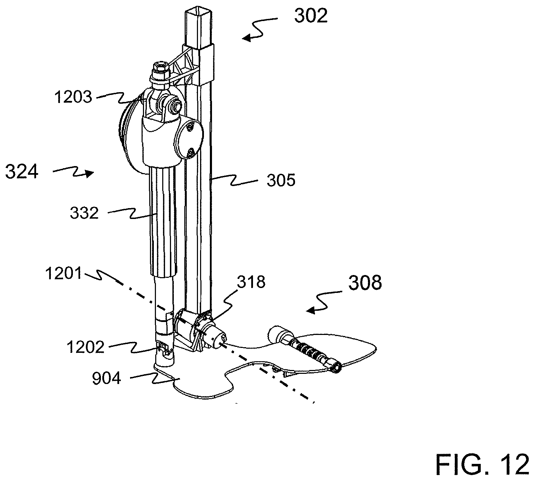

La figure 12 illustre une partie inférieure gauche de l'exosquelette 300 comprenant la liaison pivot cheville gauche 318. La figure 12 offre une vue en perspective de la partie inférieure gauche de l'exosquelette 300. La figure 12 illustre que la liaison pivot cheville gauche 318 présente un axe de pivotement 1201 ayant une orientation particulière. L'axe de pivotement 1201 peut être qualifié comme oblique car il n'est contenu dans aucun plan de référence : frontal, sagittal ou horizontal. En revanche, l'axe de pivotement 1201 est orienté de la manière suivante : latéro-médial, postéro-antérieur, dorso-plantaire. L'axe de pivotement 1201 comprend toutefois une composante principale perpendiculaire à l'axe longitudinal médian 901 du plan de support 310 de la structure de pied gauche 308, illustrée à la figure 9.

La figure 12 illustre aussi plus en détail le dispositif d'actionnement cheville gauche 324 associé à la liaison pivot cheville gauche 318. L'actionneur cheville gauche 332 de ce dispositif est disposé entre la structure de jambe gauche 302, dont la figure 12 illustre le segment de jambe inférieur 305, et la structure de pied gauche 308. Le dispositif d'actionnement cheville gauche 324 peut provoquer un pivotement de la structure de pied gauche 308 par rapport à la structure de jambe gauche 302 selon l'axe de pivotement 1201 de la liaison pivot cheville gauche 318.

Le dispositif d'actionnement cheville gauche 324 comprend un joint de Cardan 1202 et une liaison de rotule 1203 en sus de l'actionneur cheville gauche 332. Le joint de Cardan 1202 relie une extrémité de l'actionneur cheville gauche 332 à la structure de pied gauche 308, plus précisément à la plate-forme arrière 904 de celle-ci. La liaison de rotule 1203 relie une autre extrémité de l'actionneur cheville gauche 332 au segment de jambe inférieur 305 à un point de raccordement éloigné de la structure de pied gauche 308. L'actionneur cheville gauche 332 peut être sous forme d'un vérin, comme il a été mentionné dans ce qui précède. L'actionneur cheville gauche 332 est situé postérieurement au segment de jambe inférieur 305 et s'apparente en quelque sorte à un muscle soléaire.

En variante, le dispositif d'actionnement cheville gauche 324 peut également comprendre deux joint de Cardan en sus de l'actionneur cheville gauche, dans le cas où l'actionneur cheville gauche comprend un actionneur linéaire sans anti-rotation (tel qu'un vérin dont la tige est mobile en rotation autour de son axe). Dans ce cas, un premier des joints de Cardan peut relier une extrémité de l'actionneur cheville gauche à la structure de pied gauche 308, plus précisément à la plate-forme arrière 904 de celle-ci, tandis que le deuxième joint de Cardan relie une autre extrémité de l'actionneur cheville gauche 332 au segment de jambe inférieur 305 à un point de raccordement éloigné de la structure de pied gauche 308.

Le dispositif d'actionnement cheville gauche 324, la liaison pivot cheville gauche 318, le segment de jambe inférieur 305, et la structure de pied gauche 308, forment une boucle cinématique. Cette boucle cinématique peut effectuer des mouvements en trois dimensions, qui ne restent donc pas compris dans un plan de référence. Lors de ces mouvements l'actionneur cheville gauche 332 reste le long du segment de jambe inférieur 305 de l'exosquelette 300. Cela permet un faible encombrement de cet ensemble et évite des interférences entre l'actionneur cheville gauche 332 et la jambe gauche 101 de la personne portant l'exosquelette 300.

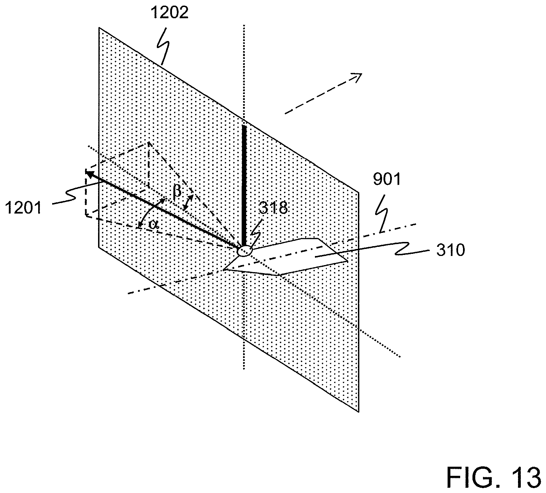

La figure 13 illustre schématiquement l'axe de pivotement 1201 de la liaison pivot cheville gauche 318. La figure 13 présente un diagramme schématique de l'axe de pivotement 1201. Le plan de support 310 de la structure de pied gauche 308 est représenté schématiquement dans cette figure. Un plan 1202 perpendiculaire à l'axe longitudinal médian 901 du plan de support 310 est aussi représenté. Une flèche représente le sens de la marche.

L'axe de pivotement 1201 de la liaison pivot cheville gauche 318 présente un angle β non nul compris dans une plage de 0° à 30° par rapport au plan de support 310 de la structure de pied, de préférence compris entre 5° et 30°. L'axe de pivotement 1201 présente un angle α non nul compris dans une plage de 0° à 45° par rapport à un plan 1202 perpendiculaire à l'axe longitudinal médian 901 du plan de support 310. L'une et l'autre plage d'angles peut aussi avoir une limite inférieure plus élevée, par exemple, d'un ou quelques degrés. Par exemple, l'angle α peut être de l'ordre de 3° (à 1 degré près), pour un angle β de l'ordre de 16° (à 1 degré près), afin d'optimiser la position de l'axe de pivotement 1201 de la liaison pivot cheville et d'approcher au mieux le mouvement humain, ce qui permet en outre de réduire la consommation énergétique.

En présentant cet axe de pivotement 1201, qui est oblique, la liaison pivot cheville gauche 318 permet à l'exosquelette 300 de produire des mouvements qui se rapprochent de mouvements naturels au niveau d'une cheville humaine, notamment des mouvements qui sont les plus fréquents et importants. Une cheville humaine, ainsi qu'un arrière-pied, constituent une biomécanique d'une complexité relativement grande. Cette biomécanique a plusieurs degrés de libertés, notamment dans des articulations tibio-tarsienne, sous-astragalienne et Chopart. Ces degrés de libertés jouent des rôles importants dans des processus de locomotion et d'équilibrage d'un être humain.

L'orientation particulière de l'axe de pivotement 1201 ajoute un déport dans un sens medio-latéral à une inclinaison de la structure de jambe gauche 302 dans un sens postéro-antérieur, et inversement. Plus spécifiquement, une inclinaison de la structure de jambe gauche 302 dans un sens « positif », vers l'avant, s'accompagne d'un déport latéral relativement faible de cette structure par rapport à l'axe longitudinal médian 901 de la structure de pied gauche 308. Ce déport est donc orienté vers l'extérieur. Inversement, une inclinaison de la structure de jambe gauche 302 dans un sens « négatif », vers l'arrière, s'accompagne d'un déport vers l'intérieur par rapport à l'axe longitudinal médian de la structure de pied gauche 308. Ce déport, qui est orienté vers l'intérieur, peut être plus important que le déport orienté vers l'extérieur.

Le déport dans le sens medio-latéral, grâce à l'orientation particulière de l''axe de pivotement 1201 de la liaison pivot cheville gauche 318, permet un transfert du poids du corps vers un pied porteur. Cela est en lien avec des mouvements de la structure de bassin 301, décrits dans ce qui précède, qui peuvent également contribuer à ce transfert de poids. Le transfert de poids intervient lors du démarrage d'un pas, mais aussi en régime permanent de marche, ainsi qu'en stabilisation en position debout. Par ailleurs, pendant la marche, lors d'une propulsion il existe une phase où la liaison pivot cheville gauche 318 est en flexion plantaire et où la structure de pied est pliée en deux au niveau de la liaison pivot pied 905. Grâce à l'orientation particulière de l'axe de pivotement 1201, une translation latérale du centre de gravité peut alors s'opérer d'un pied vers l'autre.

La liaison pivot cheville gauche 318 substitue donc de façon efficace la biomécanique relativement complexe de la cheville humaine, et de l'arrière-pied humain. La liaison pivot cheville gauche 318 constitue un système relativement simple, peu encombrant, et fiable. Cependant, ce système permet des mouvements s'approchant des mouvements importants que la biomécanique effectue lors d'un processus de marche, ou lors d'un processus de stabilisation. La description de la liaison pivot cheville gauche 318 dans ce qui précède, s'applique mutatis mutandis à la liaison pivot cheville droite 319.

En se référant de nouveau à la figure 5, le processeur 514 de l'exosquelette 300 peut être programmé pour effectuer plusieurs modes de contrôle. C'est-à-dire, le processeur 514 peut comprendre un programme, c'est-à-dire un ensemble d'instructions exécutables, définissant plusieurs modes de contrôle. Par exemple, un mode de contrôle de stabilisation peut être prévu pour maintenir la personne portant l'exosquelette en une position de repos. Un mode de contrôle de marche peut être prévu pour assister la personne portant l'exosquelette à faire une marche. D'autres modes de contrôle peuvent être prévus pour, par exemple, monter des marches, descendre des marches, s'asseoir sur une chaise, et se lever d'une chaise. Dans tous ces modes de contrôle, le processeur 514 contrôle au moins une partie des actionneurs décrits dans ce qui précède, provoquant ainsi des mouvements de l'exosquelette 300.

Le programme peut également permettre au processeur 514 de sélectionner un mode de contrôle, et de l'effectuer, en fonction des signaux de détection en provenance du détecteur 510 et, plus spécifiquement, des capteurs inertiels 511, 512, 513. L'exosquelette 300 peut être muni d'autres capteurs pouvant transmettre des informations utiles au processeur 514 pour effectuer le mode de contrôle sélectionné. Par exemple, un ou plusieurs capteurs capables de détecter des obstacles peuvent être prévus sur la structure de pied gauche 308 et sur la structure de pied droite 309. Ces capteurs, qui peuvent être optiques, sont ainsi à même de détecter, par exemple, une marche ou un escalier. Un tel capteur pourrait également détecter une distance par rapport à un obstacle et communiquer cette information au processeur 514.

Une sélection d'un mode de contrôle et sa mise en œuvre peut être fondée sur un paramètre dynamique du buste 109 de la personne, illustrée à la figure 1, portant l'exosquelette. Les capteurs inertiels peuvent détecter un tel paramètre et communiquer une information relative au paramètre en question au processeur 514. Ainsi, le processeur 514 peut sélectionner un mode de contrôle, et le mettre en œuvre, à partir d'une vitesse de déplacement du buste 109, ou à partir d'une accélération du buste 109, telle que mesurée. Dans un autre mode de réalisation, le processeur 514 peut déterminer une position d'un centre de gravité à partir de signaux de détection en provenance des capteurs inertiels. Le processeur 514 sélectionne un mode de contrôle, et le met en œuvre, à partir de ce centre de gravité.

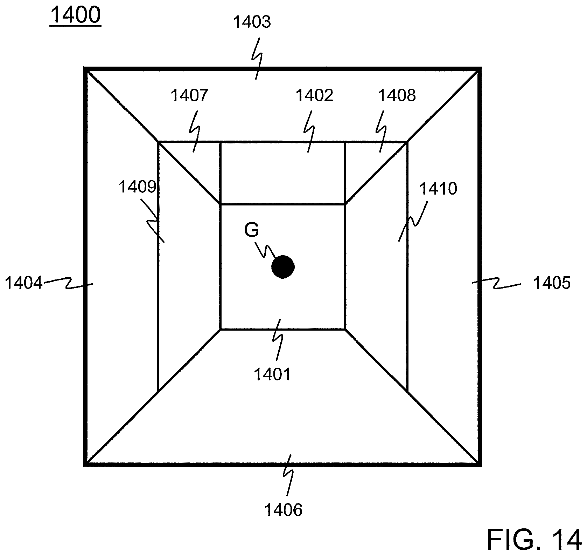

La figure 14 illustre un plan de projection 1400 pour une sélection de mode de contrôle. Le processeur 514 projette sur ce plan 1400 le centre de gravité G établi à partir des informations en provenance du détecteur 510. Le plan de projection 1400 comprend différentes zones 1401 à 1410. Différents modes de contrôle sont respectivement associés aux différentes zones 1401 à 1410. Le processeur 514 applique un mode de contrôle associé à une zone dans laquelle se trouve le centre de gravité G.

Le plan de projection 1400 comprend une zone centrale 1401. Cette zone centrale 1401 est associée à un mode de stabilisation statique. Dans ce mode, le processeur 514 stabilise l'exosquelette 300 de manière statique en gardant les deux structures de pied 308, 309 au sol. Le processeur 514 répond à une perturbation au niveau du buste 109 en forçant l'exosquelette 300 à effectuer un ou plusieurs mouvements appropriés, compensatoires. Par exemple, si la personne portant l'exosquelette se penche légèrement en arrière, le processeur 514 pourrait provoquer un fléchissement de l'exosquelette 300 au niveau des liaisons pivot genou 316, 317 afin de ramener le centre de gravité G vers l'avant au centre d'un polygone de sustentation.

Le plan de projection 1400 comprend une zone de marche 1402 associée à un mode de marche normale. Afin d'enclencher le mode de marche normale, la personne portant l'exosquelette doit se pencher suffisamment en avant pour que le centre de gravité G sorte donc de la zone centrale 1401 et entre dans la zone de marche normale 1402. L'exosquelette 300 commence à marcher vers l'avant et s'arrête si la personne se redresse.

Le plan comprend aussi des zones de stabilisation d'urgence. Si l'utilisateur est trop penché en avant, le centre de gravité entre dans une zone de stabilisation d'urgence antérieure 1403. Le processeur 514 amène l'exosquelette 300 à effectuer un grand pas en avant afin de se stabiliser. Une zone de stabilisation d'urgence latérale gauche 1404 est prévue pour un déséquilibre sur un côté gauche. Le processeur 514 amène l'exosquelette 300 à effectuer un pas latéral sur son côté gauche. De même, une zone de stabilisation d'urgence latérale droite 1405 est prévue pour un déséquilibre sur un côté droit. Le processeur 514 amène l'exosquelette 300 à effectuer un pas latéral sur son côté droit. Enfin, une zone de stabilisation d'urgence postérieure 1406 est prévue pour un déséquilibre vers l'arrière. Le processeur 514 amène l'exosquelette 300 à effectuer un pas en arrière pour retrouver son équilibre.

Le plan comprend aussi des zones de pour tourner : une zone pour tourner à gauche 1407 et une zone pour tourner à droite 1408, notamment lors d'un processus de marche. Le plan peut aussi comprendre des zones pour s'écarter : une zone pour s'écarter à gauche 1409, et une zone pour s'écarter à droite 1410.

### NOTES

La description détaillée qui vient d'être faite en référence aux dessins n'est qu'une illustration de quelques modes de réalisation de l'invention. L'invention peut être réalisée de nombreuses façons différentes. Afin d'illustrer ceci, quelques alternatives sont indiquées sommairement.

L'invention peut être appliquée dans de nombreux types d'exosquelette. Par exemple, l'invention peut être appliquée dans un exosquelette qui ne comprend qu'une seule structure de jambe, avec une seule structure de pied.

Un exosquelette conforme à l'invention peut comprendre un nombre d'actionneurs inférieur, ou supérieur, au nombre d'actionneurs dans les modes de réalisations décrits en détails en référence aux dessins. Par exemple, d'autres modes de réalisation peuvent être obtenus en supprimant un dispositif d'actionnement associé à une liaison pivot. C'est-à-dire, une liaison pivot ne doit pas nécessairement être actionnée, mais peut être libre. Par ailleurs, d'autres modes de réalisation peuvent être obtenus en supprimant ou en ajoutant des liaisons pivot, ainsi que d'autres éléments. Un mode de réalisation alternatif peut être plus simple ou plus élaboré que ceux décrits, à titre d'exemple, dans ce qui précède.

Une structure de bassin conforme à l'invention peut être réalisée de différentes manières. La description détaillée présente un exemple dans lequel la structure de bassin 301 ne comprend qu'un seul actionneur 407 avec des dispositifs de blocage 408, 409. Dans un autre mode de réalisation, une structure de bassin peut comprendre deux actionneurs : un actionneur pour une liaison pivot bassin gauche, et un autre actionneur pour une liaison pivot bassin droite. Une telle structure de bassin ne nécessite pas de dispositif de blocage.

Une commande d'un exosquelette conforme à l'invention peut être réalisée de nombreuses différentes manières. Par exemple, dans le cas où une commande implique une détermination d'un centre de gravité, la commande peut varier en fonction d'une position du centre de gravité dans un espace à trois dimensions, un volume. Une commande peut aussi être fondée sur une vitesse de déplacement du centre de gravité, ou une accélération.

Le terme « processeur » doit être interprété de façon large. Ce terme embrasse tout type de dispositif pouvant produire un ou plusieurs signaux de sortie à partir d'un ou plusieurs signaux d'entrée, notamment pour effectuer une fonction de contrôle. Le terme « liaison pivot » peut s'entendre tel que défini en mécanique des solides.

Les remarques qui précèdent montrent que la description détaillée en référence aux figures, illustre l'invention, telle que définie par les revendications. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclut pas la présence d'une pluralité de tels éléments ou de telles étapes.

## Revendications

1. Exosquelette (300) comprenant :
- une structure de pied (308) comprenant un plan de support (310) sur lequel un pied (107) d'une jambe (101) d'une personne portant l'exosquelette peut venir en appui lorsque le pied est à plat, le plan de support comprenant :
- une plate-forme avant (903) et une plate-forme arrière (904), et
- une liaison pivot pied (905) reliant la plate-forme avant à la plate-forme arrière,
la liaison pivot pied (308) se situant dans un quadrant délimité par une coupe sagittale médiane (113) de la personne portant l'exosquelette et une coupe frontale (115) passant par une jambe (101), l'exosquelette étant **caractérisé en ce que** la plate-forme arrière (904) est plus proche de la coupe sagittale médiane (113) que la plate-forme avant (903), de sorte qu'un axe longitudinal médian (901) du plan de support (310) présente un angle (1103) compris entre 15° et 35° par rapport à la coupe sagittale médiane lorsque l'exosquelette est en position de repos.

2. Exosquelette selon la revendication 1, dans lequel l'angle (1103) de l'axe longitudinal médian (901) du plan de support (310) avec la coupe sagittale médiane est compris entre 15° et 20°.

3. Exosquelette selon l'une quelconque des revendications 1 et 2, dans lequel la liaison pivot pied (905) comprend un membre élastiquement déformable (906) disposée pour emmagasiner de l'énergie lorsque la plate-forme avant (903) est pliée par rapport à la plate-forme arrière (904).

4. Exosquelette selon l'une quelconque des revendications 1 à 3, dans lequel le plan de support (310) de la structure de pied (308) comprend une semelle souple (1001) apte à entrer en contact avec le sol.

5. Exosquelette selon l'une quelconque des revendications 1 à 4, dans lequel le plan de support de la structure (310) de pied comprend une surface apte à entrer en contact avec le sol dont au moins une partie est délimitée par un bord arrondi (1004).

6. Exosquelette selon l'une quelconque des revendications 1 à 5, la liaison pivot pied présentant un axe de pivotement (1101) définissant un triangle rectangle dans le quadrant et ayant un angle (1102) compris dans une plage de 45° à 90° par rapport à la coupe sagittale médiane.

7. Exosquelette selon la revendication 6, dans lequel l'angle (1102) de l'axe de pivotement (1101) est compris dans une plage de 50° à 85° par rapport à la coupe sagittale médiane, de préférence entre 60° et 65°.

8. Exosquelette selon l'une quelconque des revendications 1 à 7, comprenant :
- une structure de jambe (302) disposée pour côtoyer une jambe (101) de la personne portant l'exosquelette,
- une liaison pivot cheville (318) reliant la structure de pied (308) à la structure de jambe,
la liaison pivot cheville présentant un axe de pivotement (1201) ayant :
- un angle (β) non nul compris dans une plage de 0° à 30° par rapport au plan de support (310) de la structure de pied, et
- un angle (α) non nul compris dans une plage de 0° à 45° par rapport à un plan (1202) perpendiculaire à l'axe longitudinal médian du plan de support.

9. Exosquelette selon la revendication 8, dans lequel l'axe de pivotement (1201) présente un angle (β) compris dans une plage de 5° à 30° par rapport au plan de support (310) de la structure de pied.

10. Exosquelette selon l'une des revendications 7 ou 8, dans lequel l'axe de pivotement (1201) présente un angle (β) de 16° par rapport au plan de support (310) de la structure de pied et un angle (α) de 3° par rapport au plan (1202) perpendiculaire à l'axe longitudinal médian du plan de support.

11. Exosquelette selon l'une des revendications 7 à 9, comprenant un dispositif d'actionnement disposé entre la structure de jambe (302) et la structure de pied (308) pour provoquer un pivotement de la structure de pied par rapport à la structure de jambe selon l'axe de pivotement (1201) de la liaison pivot cheville (318).

12. Exosquelette selon la revendication 11, dans lequel le dispositif d'actionnement comprend :
- un joint de Cardan (1202), une liaison de rotule (1203), et un actionneur (332, 333) disposé entre le joint de Cardan et la liaison de rotule, typiquement un actionneur linéaire, ou
- deux joints de Cardan et un actionneur linéaire sans anti-rotation disposé entre les joints de Cardan, typiquement un actionneur linéaire.

13. Exosquelette selon l'une des revendications 7 à 12, dans lequel la structure de jambe (302) comprend :
- un segment de jambe supérieur (304) disposé pour côtoyer une partie supérieure de la jambe (101) se situant au-dessus d'un genou (103) de la personne portant l'exosquelette,
- un segment de jambe inférieur (305) disposé pour côtoyer une partie inférieure de la jambe se situant en dessous du genou, et
- une liaison pivot genou (316) reliant le segment de jambe inférieur au segment de jambe supérieur,
le segment de jambe supérieur présentant une inclinaison (801) non nulle comprise dans une plage de 0° à 30° par rapport au segment de jambe inférieur lorsque l'exosquelette est en position de repos, de préférence de 0° à 20°, de sorte qu'une extrémité haute (802) du segment de jambe supérieur soit plus éloignée d'une coupe sagittale médiane (113) de la personne portant l'exosquelette qu'une extrémité basse (803).

14. Exosquelette selon l'une quelconque des revendications 8 à 13, comprenant :
- une structure de bassin (301) disposée pour être attachée au bassin (110) de la personne portant l'exosquelette,
- une liaison pivot orientation jambe (410) disposée entre la structure de bassin et la structure de jambe (302), la liaison pivot orientation jambe présentant un axe de pivotement vertical lorsque l'exosquelette est en position de repos.

15. Exosquelette selon l'une quelconque des revendications 1 à 14, comprenant un dispositif de commande (501) apte à commander au moins un actionneur (407, 412, 413, 326, 329-333) compris dans l'exosquelette.

16. Exosquelette selon la revendication 15, dans lequel le dispositif de commande (501) comprend :
- un détecteur (510) apte à détecter au moins un paramètre dynamique d'au moins une partie du buste (109) de la personne portant l'exosquelette, et
- un processeur (514) apte à appliquer un signal de commande à un actionneur (407, 412, 413, 326, 329-333) en fonction d'un paramètre détecté.

17. Exosquelette selon la revendication 16, dans lequel le détecteur (510) comprend au moins un capteur inertiel (511-513).

18. Exosquelette selon l'une quelconque des revendications 16 et 17, dans lequel le processeur (514) est configuré pour :
- contrôler au moins un actionneur (407, 412, 413, 326, 329-333) pour maintenir la personne portant l'exosquelette en une position de repos, et
- contrôler au moins un actionneur pour assister la personne portant l'exosquelette à faire une marche.

19. Exosquelette selon la revendication 18, dans lequel le processeur (514) est configuré pour déterminer une position d'un centre de gravité (G) d'au moins une partie du corps de la personne portant l'exosquelette et contrôler le ou les actionneurs (407, 412, 413, 326, 329-333) pour assister la personne portant l'exosquelette à faire une marche en fonction de la position du centre de gravité.

20. Exosquelette selon la revendication 19, dans lequel le processeur est configuré pour contrôler le ou les actionneurs (407, 412, 413, 326, 329-333) pour maintenir la personne portant l'exosquelette en une position de repos ou assister la personne portant l'exosquelette à faire une marche en fonction de la zone (1401-1410) dans un plan (1400) dans laquelle se trouve une projection du centre de gravité (G).

## Patentansprüche

1. Exoskelett (300), umfassend:
- eine Fußstruktur (308), umfassend eine Trägerebene (310), auf der ein Fuß (107) eines Beins (1010) einer das Exoskelett tragenden Person zum Aufstützen kommen kann, wenn der Fuß flach aufliegt, wobei die Trägerebene umfasst:
- eine vordere Plattform (903) und eine hintere Plattform (904) und
- eine Fuß-Angelverbindung (905), die die vordere Plattform mit der hinteren Plattform verbindet,
wobei sich die Fuß-Angelverbindung (308) in einem Viertelkreis befindet, der von einem medianen sagittalen Schnitt (113) der das Exoskelett tragenden Person, und einem frontalen Schnitt (115), der durch ein Bein (101) hindurchtritt, begrenzt ist, wobei das Exoskelett **dadurch gekennzeichnet ist, dass** die hintere Plattform (904) näher an dem medianen sagittalen Schnitt (113) ist als die vordere Plattform (903) derart, dass eine mediane Längsachse (901) der Trägerebene (310) einen Winkel (1103) aufweist, der zwischen 15° und 35° im Verhältnis zum medianen sagittalen Schnitt inbegriffen ist, wenn das Exoskelett in der Ruheposition ist.

2. Exoskelett gemäß Anspruch 1, bei dem der Winkel (1103) der medianen Längsachse (901) der Trägerebene (310) mit dem medianen sagittalen Schnitt zwischen 15° und 20° inbegriffen ist.

3. Exoskelett gemäß irgendeinem der Ansprüche 1 und 2, bei dem die Fuß-Angelverbindung (905) ein elastisch verformbares Glied (906) umfasst, das zum Speichern der Energie angeordnet ist, wenn die vordere Plattform (903) in Bezug auf die hintere Plattform (904) gefaltet ist.

4. Exoskelett gemäß irgendeinem der Ansprüche 1 bis 3, bei dem die Trägerebene (310) der Fußstruktur (308) eine elastische Sohle (100) umfasst, die geeignet ist, mit dem Boden in Kontakt zu treten.

5. Exoskelett gemäß irgendeinem der Ansprüche 1 bis 4, bei dem die Trägerebene der Fußstruktur (310) eine Fläche umfasst, die geeignet ist, mit dem Boden in Kontakt zu treten, von dem wenigstens ein Teil von einem abgerundeten Rand (1004) begrenzt ist.

6. Exoskelett gemäß irgendeinem der Ansprüche 1 bis 5, wobei die Fuß-Angelverbindung eine Schwenkachse (1101) aufweist, die ein rechtwinkliges Dreieck im Viertelkreis definiert und einen Winkel (1102) aufweist, der in einem Bereich von 45° bis 90° in Bezug auf den medianen sagittalen Schnitt inbegriffen ist.

7. Exoskelett gemäß Anspruch 6, bei dem der Winkel (1102) der Schwenkachse (1101) in einem Bereich von 50° bis 85° in Bezug auf den medianen sagittalen Schnitt, bevorzugt zwischen 60° und 65°, inbegriffen ist.

8. Exoskelett gemäß irgendeinem der Ansprüche 1 bis 7, umfassend:
- eine Beinstruktur (302), die angeordnet ist, um an ein Bein (101) der das Exoskelett tragenden Person zu grenzen,
- eine Fußgelenks-Schwenkverbindung (318), die die Fußstruktur (308) mit der Beinstruktur verbindet, wobei die Fußgelenks-Schwenkverbindung eine Schwenkachse (1201) aufweist, die:
- einen Winkel (β) ungleich Null aufweist, der in einem Bereich von 0° bis 30° in Bezug auf die Trägerebene (310) der Fußstruktur inbegriffen ist, und
- einen Winkel (α) ungleich Null aufweist, der in einem Bereich von 0° bis 45° in Bezug auf eine Ebene (1202) inbegriffen ist, die lotrecht zur medianen Längsachse der Trägerebene ist.

9. Exoskelett gemäß Anspruch 8, bei dem die Schwenkachse (1201) einen Winkel (β) aufweist, der in einem Bereich von 5° bis 30° in Bezug auf die Trägerebene (310) der Fußstruktur inbegriffen ist.

10. Exoskelett gemäß einem der Ansprüche 7 oder 8, bei dem die Schwenkachse (1201) einen Winkel (β) von 16° in Bezug auf die Trägerebene (310) der Fußstruktur und einen Winkel (α) von 3° in Bezug auf die lotrechte Ebene (1202) zur medianen Längsachse der Trägerebene aufweist.

11. Exoskelett gemäß einem der Ansprüche 7 bis 9, umfassend eine Betätigungsvorrichtung, die zwischen der Beinstruktur (302) und der Fußstruktur (308) angeordnet ist, um ein Schwenken der Fußstruktur in Bezug auf die Beinstruktur gemäß der Schwenkachse (1201) der Fußgelenks-Schwenkverbindung (318) hervorzurufen.

12. Exoskelett gemäß Anspruch 11, bei dem die Betätigungsvorrichtung umfasst:
- ein Kardangelenk (1202), eine Kniescheiben-Verbindung (1203) und einen Betätiger (332, 333), der zwischen dem Kardangelenk und der Kniescheiben-Verbindung angeordnet ist, typischerweise ein linearer Betätiger oder
- zwei Kardangelenke und einen linearen Betätiger ohne Drehhemmung, der zwischen den Kardangelenken angeordnet ist, typischerweise einen linearen Betätiger.

13. Exoskelett gemäß einem der Ansprüche 7 bis 12, in der Beinstruktur (302), umfassend:
- ein oberes Beinsegment (304), das angeordnet ist, um an einen oberen Teil des Beins (101) anzugrenzen, der sich oberhalb eines Knies (103) der das Exoskelett tragenden Person befindet,
- ein unteres Beinsegment (305), das angeordnet ist, um an einem unteren Teil des Beins anzugrenzen, das sich unterhalb des Knies befindet, und
- eine Knie-Schwenkverbindung (316), die das untere Beinsegment mit dem oberen Beinsegment verbindet,
wobei das obere Beinsegment eine Neigung (801) ungleich Null aufweist, die in einem Bereich von 0° bis 30° in Bezug auf das untere Beinsegment, wenn das Exoskelett in der Ruheposition ist, bevorzugt zwischen 0° und 20°, derart inbegriffen ist, dass ein hohes Ende (802) des oberen Beinsegments weiter von einem medianen sagittalen Schnitt (113) der das Exoskelett tragenden Person entfernt ist als ein unteres Ende (803).

14. Exoskelett gemäß irgendeinem der Ansprüche 8 bis 13, umfassend:
- eine Beckenstruktur (301), die angeordnet ist, um am Becken (110) der das Exoskelett tragenden Person angeordnet zu sein,
- eine Beinausrichtung-Schwenkverbindung (410), die zwischen der Beckenstruktur und der Beinstruktur (302) angeordnet ist, wobei die Beinausrichtungs-Schwenkverbindung eine vertikale Schwenkachse aufweist, wenn das Exoskelett in der Ruheposition ist.

15. Exoskelett gemäß irgendeinem der Ansprüche 1 bis 14, umfassend eine Steuervorrichtung (501), die zum Steuern wenigstens eines Betätigers (407, 412, 413, 326, 329-333) geeignet ist, der im Exoskelett inbegriffen ist.

16. Exskelett gemäß Anspruch 15, bei dem die Steuervorrichtung (501) umfasst:
- einen Fühler (510), der zum Detektieren wenigstens eines dynamischen Parameters wenigstens eines Teils der Büste (109) der das Exoskelett tragenden Person geeignet ist, und
- einen Prozessor (514), der zum Anwenden eines Steuersignals auf einen Betätiger (407, 412, 413, 326, 329-333) in Abhängigkeit von einem detektierten Parameter geeignet ist.

17. Exoskelett gemäß Anspruch 16, bei dem der Fühler (510) wenigstens einen Trägheitssensor (511-513) umfasst.

18. Exoskelett gemäß irgendeinem der Ansprüche 16 und 17, bei dem der Prozessor (514) ausgestaltet ist zum:
- Kontrollieren wenigstens eines Betätigers (407, 412, 413, 326, 329-333) zum Halten der das Exoskelett tragenden Person in einer Ruheposition; und
- Kontrollieren wenigstens eines Betätigers zum Unterstützen der das Exoskelett tragenden Person beim Gehen.

19. Exoskelett gemäß Anspruch 18, bei dem der Prozessor (514) zum Bestimmen einer Position eines Schwerpunktes (G) wenigstens eines Teils des Körpers der das Exoskelett tragenden Person und zum Kontrollen des oder der Betätiger(s) (407, 412, 413, 326, 329-333) ausgestaltet ist, um die das Exoskelett tragende Person beim Gehen in Abhängigkeit von der Position des Schwerpunktes zu unterstützen.

20. Exoskelett gemäß Anspruch 19, bei dem der Prozessor zum Kontrollieren des oder der Betätiger(s) (407, 412, 413, 326, 329-333) ausgestaltet ist, um die das Exoskelett tragende Person in einer Ruheposition zu halten oder die das Exoskelett tragende Person beim Gehen in Abhängigkeit von der Zone (1401-1410) in einer Ebene (1400) zu unterstützen, in der sich eine Projektion des Schwerpunktes (G) befindet.

## Claims

1. An exoskeleton (300) comprising:
- a foot structure (308) comprising a support plane (310) on which a foot (107) of a leg (101) of a person wearing the exoskeleton can bear when the foot is flat, the support plane comprising:
- a front platform (903) and a rear platform (904), and
- a foot pivot connection (905) connecting the front platform to the rear platform,
the foot pivot connection (308) being located in a quadrant delimited by a median sagittal section (113) of the person wearing the exoskeleton and a frontal section (115) passing through a leg (101), the exoskeleton being **characterised in that** the rear platform (904) is closer to the median sagittal section (113) than the front platform (903), so that a median longitudinal axis (901) of the support plane (310) has an angle (1103) between 15° and 35° relative to the median sagittal section when the exoskeleton is in a resting position.

2. The exoskeleton according to claim 1, wherein the angle (1103) of the median longitudinal axis (901) of the support plane (310) with the median sagittal section is between 15° and 20°.

3. The exoskeleton according to any of claims 1 to 2, wherein the foot pivot connection (905) comprises an elastically deformable member (906) disposed to accumulate energy when the front platform (903) is folded relative to the rear platform (904).

4. The exoskeleton according to any of claims 1 to 3, wherein the support plane (310) of the foot structure (308) comprises a flexible sole (1001) able to contact the ground.

5. The exoskeleton according to any of claims 1 to 4, wherein the support plane of the foot structure (310) comprises a surface able to contact the ground at least part of which is delimited by a rounded edge (1004).

6. The exoskeleton according to any of claims 1 to 5, the foot pivot connection having a pivot axis (1101) defining a right triangle in the quadrant and having an angle (1102) within a range from 45° to 90° relative to the median sagittal section.

7. The exoskeleton according to claim 6, wherein the angle (1102) of the pivot axis (1101) is within a range from 50° to 85° relative to the median sagittal section, preferably between 60° and 65°.

8. The exoskeleton according to any of claims 1 to 7, comprising:
- a leg structure (302) disposed to be close to a leg (101) of the person wearing the exoskeleton,
- an ankle pivot connection (318) connecting the foot structure (308) to the leg structure,
the ankle pivot connection having a pivot axis (1201) having:
- a non-zero angle (β) within a range from 0° to 30° relative to the support plane (310) of the foot structure, and
- a non-zero angle (α) within a range from 0° to 45° relative to a plane (1202) perpendicular to the median longitudinal axis of the support plane.

9. The exoskeleton according to claim 8, wherein the pivot axis (1201) has an angle (β) within a range from 5° to 30° relative to the support plane (310) of the foot structure.

10. The exoskeleton according to one of claims 7 to 8, wherein the pivot axis (1201) has an angle (β) of 16° relative to the support plane (310) of the foot structure and an angle (α) of 3° relative to the plane (1202) perpendicular to the median longitudinal axis of the support plane.

11. The exoskeleton according to one of claims 7 to 9, comprising an actuating device disposed between the leg structure (302) and the foot structure (308) to cause the foot structure to pivot relative to the leg structure along the pivot axis (1201) of the ankle pivot connection (318).

12. The exoskeleton according to claim 11, wherein the actuating device comprises:
- a Cardan joint (1202), a ball-joint link (1203), and an actuator (332, 333) disposed between the Cardan joint and the ball-joint link, typically a linear actuator, or
- two Cardan joints and an anti-rotation free linear actuator disposed between the Cardan joints, typically a linear actuator.

13. The exoskeleton according to one of claims 7 to 12, wherein the leg structure (302) comprises:
- an upper leg segment (304) disposed to be close to an upper part of the leg (101) located above a knee (103) of the person wearing the exoskeleton,
- a lower leg segment (305) disposed to be close to a lower part of the leg located below the knee, and
- a knee pivot connection (316) connecting the lower leg segment to the upper leg segment,
the upper leg segment having a non-zero tilt (801) within a range from 0° to 30° relative to the lower leg segment when the exoskeleton is in the resting position, preferably from 0° to 20°, so that a top end (802) of the upper leg segment is farther from a median sagittal section (113) of the person wearing the exoskeleton than a bottom end (803).

14. The exoskeleton according to any of claims 8 to 13, comprising:
- a pelvis structure (301) disposed to be attached to the pelvis (110) of the person wearing the exoskeleton,
- a leg oriented pivot connection (410) disposed between the pelvis structure and the leg structure (302), the leg oriented pivot connection having a vertical pivot axis when the exoskeleton is in the resting position.

15. The exoskeleton according to any of claims 1 to 14, comprising a control device (501) able to control at least one actuator (407, 412, 413, 326, 329-333) included in the exoskeleton.

16. The exoskeleton according to claim 15, wherein the control device (501) comprises:
- a detector (510) able to detect at least one dynamic parameter of at least one part of the chest (109) of the person wearing the exoskeleton, and
- a processor (514) able to apply a control signal to an actuator (407, 412, 413, 326, 329-333) as a function of a detected parameter.

17. The exoskeleton according to claim 16, wherein the detector (510) comprises at least one inertial sensor (511-513).

18. The exoskeleton according to any of claims 16 to 17, wherein the processor (514) is configured to:
- control at least one actuator (407, 412, 413, 326, 329-333) to keep the person wearing the exoskeleton in a resting position, and
- control at least one actuator to assist the person wearing the exoskeleton in walking.

19. The exoskeleton according to claim 18, wherein the processor (514) is configured to determine a position of a centre of gravity (G) of at least one part of the body of the person wearing the exoskeleton and control the actuator(s) (407, 412, 413, 326, 329-333) to assist the person wearing the exoskeleton in walking as a function of the position of the centre of gravity.

20. The exoskeleton according to claim 19, wherein the processor is configured to control the actuator(s) (407, 412, 413, 326, 329-333) to keep the person wearing the exoskeleton in a resting position or assist the person wearing the exoskeleton in walking as a function of the zone (1401-1410) in a plane (1400) in which a projection of the centre of gravity (G) is.
